# EUROPÄISCHE PATENTSCHRIFT

(11) **EP 2 459 627 B1**
(45) Veröffentlichungstag und Bekanntmachung des Hinweises auf die Patenterteilung: **29.06.2016**
(21) Anmeldenummer: 10739302.7
(22) Anmeldetag: 28.07.2010
(51) Int. Cl.: C08J 7/18, C08J 7/04, C09D 201/02, C09D 133/06, B05D 3/06, B05D 7/02, B29C 47/06, B05D 7/24

(54) **MEHRSCHICHTIGE ERZEUGNISSE ENTHALTEND ACRYLAT-HALTIGE BESCHICHTUNGEN**
MULTI-LAYER PRODUCTS COMPRISING ACRYLATE CONTAINING COATINGS
PRODUITS MULTICOUCHES CONTENANT DES REVÊTEMENTS À BASE D'ACRYLATE

(30) Priorität: 29.07.2009 DE 102009035115
(43) Veröffentlichungstag der Anmeldung: 06.06.2012
(73) Patentinhaber: Covestro Deutschland AG, 51373 Leverkusen (DE)
(72) Erfinder: KUHLMANN, Timo, 42799 Leichlingen (DE); RAPPEN, Diethelm, 47495 Rheinberg (DE); SCHWARZ, Peter, 47800 Krefeld (DE)
(74) Vertreter: Levpat
(86) Internationale Anmeldenummer: PCT/EP2010/004615
(87) Internationale Veröffentlichungsnummer: WO 2011/012294

(56) Entgegenhaltungen:
- DE-A1- 2 928 512
- US-A- 5 271 968

## Beschreibung

Die vorliegende Erfindung betrifft ein Verfahren zur Herstellung eines mehrschichtigen Erzeugnisses umfassend a) ein Substrat enthaltend mindestens eine Substratschicht und b) mindestens eine Schutzschicht, wobei die Substratschicht thermoplastisches Polymer enthält, und wobei die Schutzschicht aus einer Beschichtungszusammensetzung enthaltend Verbindungen mit mindestens zwei funktionellen Gruppen, dadurch gekennzeichnet, dass die Schutzschicht(en) inline nach der Herstellung des Substrats enthaltend die Substratschichten aufgebracht wird / werden, sowie die nach dem erfindungsgemäßen Verfahren erhältlichen mehrschichtigen Erzeugnisse. Die nach dem erfindungsgemäßen Verfahren hergestellten mehrschichtigen Erzeugnisse weisen eine Beschichtung mit sehr hoher Qualität auf. Das erfindungsgemäße Verfahren eröffnet eine sichere und umweltschonende Herstellung der mehrschichtigen Erzeugnisse in einer Extrusionslinie.

Polycarbonatformkörper werden aufgrund ihrer ausgezeichneten Eigenschaften, wie Transparenz, Schlagfestigkeit bzw. Stoßfestigkeit und Zugfestigkeit vielfältig verwendet. Die Eigenschaften der Oberfläche des Materials, wie geringe Abrieb- und Kratzbeständigkeit und die geringe Beständigkeit gegenüber Chemikalien, sind jedoch für viele Einsatzgebiete ungenügend, weswegen in diesen Fällen auf die Formkörper spezielle Schutzschichten aufgebracht werden müssen.

Werden beispielsweise nicht weiter ausgerüstete Polycarbonatformkörper der Witterung ausgesetzt, so ist eine verstärkte Vergilbung sowie Vergrauung der Polycarbonatoberfläche zu beobachten. Gerade im Bereich von Platten und Folien, aber auch bei Spritzgussbauteilen bestehend aus Polycarbonat ist im Außeneinsatz ein lang anhaltender Verwitterungsschutz wünschenswert.

Zum Erreichen von kratz- und abriebbeständigen, chemikalienbeständigen und witterungsstabilen Polycarbonatformteilen fehlt es in der Literatur nicht an entsprechenden Versuchen, z.B. durch Aufbringen entsprechender Schutzschichten. Aus ökonomischen Gesichtspunkten ist es insbesondere wünschenswert, die Applikation der Schutzschicht "inline", d.h. in einer Produktionslinie direkt im Anschluss an die Produktion, beispielsweise der Extrusion, des Formteils durchzuführen. Wie im folgenden ausgeführt, weisen leider entweder die genutzten Materialien oder die derzeit beschriebenen inline-Applikationsverfahren Nachteile auf, so dass auf diesem Gebiet ein großer Verbesserungsbedarf besteht.

Die DE-A 19622483 beschreibt beispielsweise ein einstufiges Verfahren zur Applikation eines Beschichtungsmittels, das keinerlei organische Lösungsmittel enthält, bestehend aus einer wässrigen Dispersion eines anorganischen Kieselsols und eines nichtionischen Tensids, zur Applikation auf Hohlkammerstegplatten. Das Fehlen von Lösungsmitteln ermöglicht das Verarbeiten des Beschichtungsmaterials ohne explosionsgeschützte Apparaturen und wird als umweltfreundlich bezeichnet. Es werden dünne Schichten unter 0,4 µm Dicke beschrieben, die inline auf das warme Substrat aufgebracht werden. Nachteilig ist hierbei einerseits, dass das verdunstete Wasser gesammelt und aufgearbeitet werden muss. Andererseits können derart dünne Schichten keinen Witterungsschutz für darunter liegende Schichten bieten.

Die DE-A 4438543 beschreibt eine lösungsmittelfreie Beschichtung, die ein Lichtschutzmittel enthält und inline durch Koextrusion während des Herstellungsprozesses des Formkörpers aufgebracht wird. Dieses umweltschonende, weil lösungsmittelfreie Verfahren liefert oberflächenmodifizierte Formkörper, die jedoch aufgrund der Verwendung eines thermoplastischen Polycarbonates als Beschichtungsmittel nicht die optimale Stabilität gegen äußere Einflüsse aufweisen. So sind derartige Schichten anfällig gegen Kratzbeanspruchungen, Einwirkung von Agenzien und werden trotz Stabilisierung in der Bewitterung nach einiger Zeit gelb und trübe.

Die US-A 7241494 beschreibt UV-härtbare, lösungsmittelfreie Mischungen auf Basis von Urethanacrylaten, die inline durch Koextrusion auf Thermoplasten verarbeitet und nachträglich durch Strahlung auf dem Halbzeug gehärtet werden. Allerdings sind Extrusionstemperaturen von ca. 170°C bis 220°C an sich für Urethanacrylate nicht geeignete Verarbeitungsbedingungen, da niedermolekulare Bestandteile aus der heißen Schmelze verdampfen und somit die Zusammensetzung nicht mehr konstant ist sowie sich die niedermolekularen Bestandteile entzünden können. Weiterhin entstehen bei abweichender Prozessführung Strömungsbilder, die Auswirkungen auf die Transparenz sowie auf das optische Erscheinungsbild des modifizierten Halbzeugs haben. Ein weiterer Nachteil der Koextrusion birgt der Temperaturunterschied der zur Extrusion und Koextrusion verwendeten Materialien. Speziell bei Polycarbonaten werden Temperaturen von bis zu 300°C zur Extrusion genutzt. Bei Materialien, die bei deutlich geringen Temperaturen koextrudiert werden, werden häufig Schichtdickenverteilungen der Koextrusionsschicht beobachtet bzw. bei zu breiten Formkörpern können die Randbereiche nicht mehr vollständig mit Koextrusionsmaterial bedeckt werden. Platten mit einer Beschichtung von befriedigender Qualität und mit einheitlichen Schichtdicken, die gleichbleibende Materialeigenschaften gewährleisten, werden also durch dieses Verfahren nicht erhalten.

Die DE-A 3819627 offenbart UV-härtbare Mischungen enthaltend Umsetzungsprodukte von Hydroxyalkylacrylaten mit aliphatischen Polyisocyanaten, die unter anderem mindestens eine Uretdiongruppe und/oder Triisocyanuratgruppe und/oder Biuretgruppe pro Molekül enthalten. Die Verwendung von Mischungen derartiger Urethanacrylate mit monofunktionellen ethylenisch ungesättigten Verbindungen als Bindemittel für Lacke für Polycarbonat wird beschrieben. Derartige monofunktionellen Verbindungen sind aus heutiger Sicht ökologisch bedenklich und in den erfindungsmäßigen Beschichtungsmittel wird auf deren Einsatz verzichtet. Weiterhin wird das Aufbringen des Lackmaterials durch Tauchen, Sprühen und Schleudern lösungsmittelfrei auf die Formkörper erwähnt, wobei allerdings keinerlei Verfahrensparameter offenbart werden. Durch ein fehlerhaftes Fertigungsverfahren, wie z.B. einer ungenügenden Umsetzung der ethylenisch ungesättigten Doppelbindungen in der Bindemittelmatrix, kann die gesamte Performance des beschichteten Formteils leiden.

Die EP-A 0 668 330 offenbart die Verwendung von UV-härtbaren acrylathaltigen Beschichtungszusammensetzungen, die 5-80 % Reaktivverdünner und bis zu 80 % Lösungsmittel enthalten können. Es werden keine inline-Beschichtungsverfahren, insbesondere keine Rakel- oder Walzauftragung genannt und in den Beispielen werden lösungsmittelhaltige Beschichtungen mit ca. 60 % Reaktivverdünner beschrieben. Die Beschreibung enthält keine Hinweise, welche Komponenten in welchen Anteilen ausgewählt werden müssen, um die Beschichtungszusammensetzung lösungsmittelfrei unter inline-Bedingungen auftragen zu können.

DE 10 2006 015 709 beschreibt ein Verfahren zur Herstellung von allophanathaltigen, durch aktinische Strahlung härtbare Polyurethanpolymere, ein inline Verfahren zur Herstellung von mehrschichtigen Erzeugnissen wird jedoch nicht beschrieben.

WO 2009/145781 A1 ist ein nicht vorveröffentlichtes Dokument und beschreibt UV härtbare Lackzusammensetzungen enthaltend aliphatische Urethanacrylat-Harze bevorzugt zur Herstellung von Linsen. Weitere Beschichtungsmittel für Linsen werden in der US 6316515 B1 beschrieben. Hierbei lassen sich Linsen im Allgemeinen nicht durch das im Rahmen der vorliegenden Erfindung offenbarte Walzverfahren beschichten. Das inline Verfahren zur Herstellung von mehrschichtigen Erzeugnissen wird in beiden Anmeldungen nicht erwähnt.

US 4,929,506 beschreibt beschichtete Polycarbonat-Artikel mit einer Urethanacrylat-haltigen Beschichtung, wobei die resultierenden Erzeugnisse enthaltend das genannte Beschichtnugsmittel nach dem Aushärten thermoverformbar sind. Die im Rahmen der vorliegenden Erfindung hergestellten Erzeugnisse sind nach dem Aushärten jedoch in jedem Fall nicht mehr thermoformierbar.

KR 100863568 B1 beschreibt ein inline Verfahren, bei dem ein Substrat zunächst beschichtet und anschließend vor dem Aushärten mit einer weiteren Deckfolie, die auf die Beschichtung aufgebracht wird, versehen wird. Würde auf das Aufbringen der Deckfolie verzichtet, erhielte man jedoch nur ein beschichtetes Substrat mit schlechter Oberflächenqualität. Das Aufbringen einer Deckfolie ist bei dem erfindungsgemäßen Verfahrens nicht erforderlich um beschichtete Erzeugnisse hoher Qualität zu erhalten.

EP 1,629,053 B1 beschreibt photopolymersierbare Beschichtungsmittel, das inline Verfahren der vorliegenden Erfindung wird jedoch nicht beschrieben.

WO 2009/01638 beschreibt Hybrid-Beschichtungen mit anorganischen Bestandteilen, Die Beschichtung der vorliegenden Erfindung sind organisch. Das erfindungsgemäße Verfahren ist ebenfalls nicht beschrieben.

US 2009/0224162 A1 beschreibt beschichtete Folien für Automobilanwendungen, wobei zuächst eine Substratschicht und eine farbgebende Schicht durch einen vorgeschalteten Koextrusions- oder Laminierungsvorgang zusammengefügt werden und danach in einem separaten Schritt die Beschichtung auf die farbgebende Schicht in einem offline-Verfahren appliziert wird. Das inline Verfahren der vorliegenden Erfindung wird nicht beschrieben.

Im Gegensatz zu einer offline-durchgeführten Applikation ist bei der inline-Applikation die Möglichkeit der Verlängerungen von Verweilzeiten beschränkt. An den inline-applizierten Lack wird daher auch die Anforderung gestellt, dass er innerhalb der geringen, zur Verfügung stehenden Verweilzeit eine ausreichende Haftfestigkeit zum Substrat ausbildet. Dies wird zumeist durch die Ausbildung einer sogenannten IPL-Schicht (interpenetrating layer) erreicht, bei der teilweise flüssige Bestandteile des Beschichtungsstoffes, wie z.B. das Bindemittel oder der Reaktivverdünner in den Untergrund diffundieren und dort nach der anschließenden Härtung des Materials einen festen Verbund zwischen Substrat und Lackschicht ausbilden. Neben der ausreichenden Ausbildung der IPL kann die Haftfestigkeit von Lackschichten zusätzlich von der Güte der Vernetzung des Beschichtungsstoffes abhängen.

Die US 5 271 968 A offenbart ein Verfahren zur Herstellung einer abriebbeständigen Beschichtung auf einem Polycarbonat-Formkörper. Weiters wird die Ausbildung einer optimalen Haftfestigkeit zwischen Substrat und Lackschicht durch die Ausbildung einer IPL Schicht beschrieben. Das Aufbringen der Schutzschicht unmittelbar nach der Herstellung des Substrats sowie eine Beschichtungszusammensetzung aufweisend eine oder mehrere Verbindungen ausgewählt aus der Gruppe enthaltend Isocyanate mit mindestens einer ethylenisch ungesättigten Doppelbindung im Molekül werden nicht beschrieben.

Die DE 29 28 512 A1 offenbart ein Verfahren zur Herstellung einer kratzfesten Beschichtung auf einem Formkörper aus thermoplastischem Kunststoff, insbesondere aus Polymethylacrylat oder Polycarbonat, durch Aufbringen einer Beschichtungszusammensetzung, die polymerisierbare Monomere, wie z.B. Trimethylolpropantriacrylat, Pentaerythrittetraacrylat und Hexandioldiacrylat umfasst, und unmittelbar nach der Extrusion des Formkörpers vorgenommen wird. Eine Beschichtungszusammensetzung aufweisend eine oder mehrere Verbindungen ausgewählt aus der Gruppe enthaltend Isocyanate mit mindestens einer ethylenisch ungesättigten Doppelbindung im Molekül wird nicht beschrieben.

Es wurde bisher angenommen, dass die wirtschaftlich realisierbaren Verweilzeiten im inline - Verfahren zur Herstellung von gut haftenden Beschichtungen hoher Qualität für Zusammensetzungen enthaltend Verbindungen mit mindestens zwei funktionellen Gruppen, die durch Einwirkung aktinischer Strahlung mit ethylenisch ungesättigten Verbindungen reagieren, insbesondere für Acrylate, nicht ausreichen. Begründet wurde dies einerseits durch die zu geringe Ausbildung der IPL. Andererseits führt die während der Extrusion vorherrschende Substrattemperatur zur Erwärmung des Beschichtungsmittels, so dass dessen erhöhte Temperatur die Geschwindigkeit der Härtung von ethylenisch ungesättigten Doppelbindungen in Bindemitteln durch aktinische Strahlung derart stark hemmt, dass gerade in Nähe des Substrates das Beschichtungsmittel nicht mehr ausgehärtet wird, wodurch keine optimale Haftfestigkeit erzielt wird.

So beschreibt beispielsweise K. Studer in "Overcoming oxygen inhibition in UV-curing of acrylate coatings by carbon dioxide inerting, Part I" (Progress in Organic Coatings 48 (2003) S. 92-100) die Abhängigkeit des Umsatzes an Doppelbindungen in Acrylaten von der Temperatur sowohl für die Härtung unter Inertgasatmosphäre sowie unter Luft. Studer findet, dass der Doppelbindungsumsatz an Luft mit steigender Temperatur sinkt, was auf den Effekt der Sauerstoffinhibierung zurück geführt wird. Ein ausreichender Doppelbindungsumsatz bei Acrylat-Beschichtungen ist jedoch notwendig, um Beschichtungen herzustellen, die über gute Haftung zum Substrat und Beständigkeit verfügen.

Die Haftung kann zwar erhöht werden durch eine Erhöhung des niedermolekularen Acrylatanteils in der Beschichtungszusammensetzung, allerdings werden dann Beschichtungen von mangelhafter Qualität erhalten, beispielsweise kommt es zur Bildung von Spannungsrissen im Fertigteil oder die Substrate bestehend aus Polycarbonat werden trübe. Exemplarisch sei hier auf das Beispiel 1 aus der EP 0 668 330 A1 verwiesen, bei dem ca. 60% 1,6-Hexandioldiacrylat als Reaktivverdünner bezogen auf den Feststoffgehalt eingesetzt werden. Die Verweilzeit des ungehärteten Beschichtungsmittels auf dem Polycarbonatsubstrat wird mit 3min bei Raumtemperatur angegeben. Unabhängig von der Verwendung von zusätzlichen Lösungsmitteln wird die beschichtete Platte bei derart hohen Reaktivverdünnergehalten trübe. Weiterhin konnten derartige Beschichtungsmittelzusammensetzungen mit zu hohem Reaktivverdünnergehalt nicht mehr vollständig gehärtet werden, wodurch eine klebrige Oberfläche verbleibt. Es ist demnach ersichtlich, dass Beschichtungsmittelzusammensetzungen mit zu hohem Reaktivverdünnergehalt nicht für die inline Applikation geeignet sind.

Ausgehend vom dargelegten Stand der Technik bestand daher ein Bedarf nach Beschichtungszusammensetzungen, enthaltend Verbindungen mit mindestens zwei funktionellen Gruppen, die durch Einwirkung aktinischer Strahlung mit ethylenisch ungesättigten Verbindungen reagieren, jedoch frei von Lösungsmitteln und frei von monofunktionellen ethylenisch ungesättigten Verbindungen sind. Die Beschichtungen sollen so schnell aushärten, dass sie sich inline auf Formteile aus thermoplastischen Kunststoff applizieren lassen, aber trotzdem über eine sehr gute Beschichtungsqualität verfügen, beispielsweise soll die Beschichtung zu den Formteilen aus thermoplastischen Substraten eine gute Haftung, auch nach Belastung unter extremen Bedingung wie z.B. Lagerung in kochendem Wasser, aufweisen. Die beschichteten Formteile sollen außerdem eine ausgezeichnete Witterungsstabilität unter Glanzerhalt, hohe Kratz- und Abriebbeständigkeit und Chemikalienbeständigkeit besitzen.

In Sinne der vorliegenden Anmeldung werden die Ausdrücke (thermoplastisches) "Substrat" und "Formteil" synonym verwendet. Der Ausdruck "mehrschichtiges Erzeugnis" umfasst das Substrat bzw. Formteil, welches selbst aus mehreren Schichten bestehen kann, die erfindungsgemäßen Schutzschichten(en) sowie gegebenenfalls weitere funktionale Schichten.

Es wurden nun Beschichtungsmittelzusammensetzungen gefunden, die unter speziellen Verfahrensparametern im inline-Verfahren appliziert auch bei erhöhten Temperaturen und kurzen Verweilzeiten überraschenderweise zu gut haftenden Beschichtungen von guter Qualität führen.

Unter einer Beschichtung von guter Qualität versteht der Fachmann eine Beschichtung, die sich unter anderem durch einen guten Verlauf auszeichnet. Zusätzlich ist die Beschichtung frei von optischen Störstellen, wie zum Beispiel Partikeleinschlüssen, Kratern oder Löchern. Weiterhin zeichnet sich die Beschichtung im Allgemeinen durch eine hohe Transparenz bei einer gleichzeitigen geringen Eigentrübung aus. Beschichtungen guter Qualität weisen weiterhin eine gute Stabilität gegen äußere Einflusse auf.

Die erfindungsgemäßen, mehrschichtigen Erzeugnisse umfassen ein einschichtiges oder mehrschichtiges thermoplastisches Substrat, welches ein- oder beidseitig mit einem Beschichtungsmittel bestehend aus den Komponenten
A. 30,0 bis 80,0 Gew.-%, bevorzugt 40,0 - 70,0 Gew.-%, einer oder mehrerer Verbindungen ausgewählt aus der Gruppe enthaltend Verbindungen mit einer Molmasse größer 450 g/mol und mit mindestens zwei funktionellen Gruppen, die durch Einwirkung aktinischer Strahlung mit ethylenisch ungesättigten Verbindungen unter Polymerisation reagieren, und die keine Isocyanat-Gruppen aufweisen;
B. 15,0 bis 50,0 Gew.-%, bevorzugt 20,0 - 40,0 Gew.-%, Reaktivverdünner enthaltend mindestens zwei ethylenisch ungesättigte Gruppen,
C. 1 bis 50,0 Gew.-%, bevorzugt 1 bis 20,0 Gew.-%, besonders bevorzugt 1 bis 10,0 Gew.-% und ebenfalls besonders bevorzugt 1 - 10 Gew.-% einer oder mehrerer Verbindungen ausgewählt aus der Gruppe enthaltend Isocyanate mit mindestens einer ethylenisch ungesättigten Doppelbindung im Molekül,
D. 0,01 bis 10,0 Gew.-% Lichtschutzmittel auf Basis eines Triazin-Derivats, bevorzugt auf Basis eines Biphenyltriazin-Derivats;
E. 1,0 bis 10,0 Gew.-% Fotoinitiatoren; und
F. optional dem Fachmann weitere bekannte Lackadditive, versehen wurde und wobei die Beschichtung anschließend durch aktinische Strahlung zu einer duroplastischen Schutzschicht gehärtet wurde und bevorzugt > 99 % der Doppelbindungen aus den Komponenten A,B und C umgesetzt wurden.

Die Einsatzmenge der vorgenannten Komponenten in der Beschichtungsmittelzusammensetzung ist so zu wählen, dass die Summe der Komponenten stets 100 Gew.% ergeben. Die Beschichtungszusammensetzung beinhaltet keine Lösungsmittel, also auch nicht die in der Lackchemie normalerweise üblichen organischen Lösungsmittel, vorzugsweise Alkane, Alkohole, Ester und Ketone oder Wasser.

Die vorliegende Erfindung betrifft auch ein Verfahren zur Herstellung dieser erfindungsgemäßen, beschichteten Formkörper inline im Anschluss an eine Extrusions- oder Koextrusionslinie, in dem die Schutzschicht(en) inlinie unmittelbar nach der Herstellung des Substrats enthaltend die Substratschichten aufgebracht wird/werden und die Extrusionsgeschwindigkeit, bezogen auf die Herstellung des Substrats, 1 m/ min bis 7 m/min beträgt.

Überraschenderweise konnte festgestellt werden, dass die bisher vertretene Auffassung bezüglich der Einflussnahmemöglichkeiten auf die Haftung unter bestimmten Bedingungen für die erfindungsgemäßen Beschichtungszusammensetzungen nicht gültig ist. Durch diese Erkenntnis gelang es, thermoplastische Substrate mit vollständig lösungsmittelfreien Beschichtungen auf Basis Acrylate umweltschonend, sicher und gleichzeitig mit ausgezeichneter Qualität herzustellen.

Es lassen sich, im Gegensatz zu den im Stand der Technik getroffenen Annahmen bezüglich Acrylatbeschichtungen, die erfindungsgemäßen Beschichtungszusammensetzungen inline, beispielsweise über das erfindungsgemäße Verfahren zu beschichteten Substraten sehr guter Qualität, insbesondere mit guter Haftung auch nach Belastung, verarbeiten. Das erfindungsgemäße inline-Verfahren ist zudem deutlich wirtschaftlicher als das weit verbreitete, nachträgliche Modifizieren von Plattenoberflächen durch Spritzen, Fluten oder Tauchen, da nahezu keine Abfälle entstehen. Überschüssiges, nicht durch aktinische Strahlung umgeformtes Beschichtungsmittel kann gesammelt und wieder verwendet werden.

Weitere Vorteile des Verfahrens liegen im Verzicht auf Lacklösungsmittel oder monofunktionelle Acrylsäureester zur Regulierung der Verarbeitungsviskosität des Beschichtungsmittels begründet. Hierdurch werden einerseits weniger flüchtige organische Anteile an die Umgebung bzw. Umwelt abgegeben und andererseits die Gesundheit des Menschen deutlich geschont, da einige Lacklösungsmittel sowie spezielle monofunktionelle Acrylsäureester unter Verdacht stehen krebserzeugend zu sein.

Ein weiterer Gegenstand der Erfindung sind die mit der erfindungsgemäßen Beschichtungszusammensetzung beschichteten Substrate, enthaltend eine Schicht oder mehrere Schichten aus thermoplastischem Kunststoff. Die beschichteten Substrate weisen gegenüber den anderen lösungsmittelfrei beschichteten Produkten des Stands der Technik eine deutlich erhöhte Kratzbeständigkeit und Chemikalienresistenz sowie eine verringerte Vergilbungsneigung im Falle einer Bewitterung auf, wodurch die Lebenszeit des modifizierten Produktes erhöht wird. Gegenüber Beschichtungen hergestellt aus lösungsmittelhaltigen Zusammensetzungen, sind die erfindungsgemäßen Beschichtungen frei von Lösungsmittelresten sowie niedermolekularen Bestandteilen, welche zu Spannungsrissen in den Fertigteilen führen können. Der Verzicht auf derartige Beschichtungsmittelbestandteile in dem Verfahren führt folglich zu einer erhöhten Ausbeute, was letztlich wiederum einen positiven wirtschaftlichen sowie umweltschonenden Effekt birgt.

### Komponente A:

Als Komponente A kommen eine oder mehrere monomere oder polymere Verbindungen in Frage, die mindestens zwei funktionelle Gruppen tragen, die durch Einwirkung aktinischer Strahlung mit ethylenisch ungesättigten Verbindungen unter Polymerisation reagieren und die keine Isocyanat-Gruppen aufweisen.

Solche Verbindungen sind beispielsweise Ester, Carbonate, Acrylate, Ether, Urethane oder Amide oder polymere Verbindungen dieser Strukturtypen. Es können auch beliebige Mischungen solcher Monomere und/oder Polymere eingesetzt werden, die mindestens zwei unter Einwirkung aktinischer Strahlung polymerisierbare Gruppen enthalten.

Als Verbindungen der Komponente A können modifizierte Monomere oder Polymere eingesetzt werden, deren Modifizierung nach an sich bekannten Methoden erfolgt. Bei der Modifizierung werden entsprechende chemische Funktionalitäten in die Moleküle eingefügt. Geeignet sind α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen. Bevorzugt sind Vinylether, Acrylate und Methacrylate, besonders bevorzugt sind Acrylate.

Beispiele beinhalten die in der Technologie der Strahlenhärtung bekannten Bindemittel wie Polyetheracrylate, Polyesteracrylate, Urethanacrylate, Epoxyacrylate, Melaminacrylate, Silikonacrylate, Polycarbonatacrylate und acrylierte Polyacrylate.

Geeignete Ester werden üblicherweise durch Veresterung von Alkoholen mit 2 bis 20 Kohlenstoffatomen, bevorzugt mehrwertigen Alkoholen mit 2 bis 20 Kohlenstoffatomen, mit ungesättigten Säuren oder ungesättigten Säurechloriden erhalten, bevorzugt Acrylsäure und deren Derivate. Dazu können die dem Fachmann bekannten Methoden der Veresterung angewendet werden.

Geeignete Alkoholkomponenten bei der Veresterung sind einwertige Alkohole wie die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Ebenfalls geeignet sind zweiwertige Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol, 1,4-Cyclohexandiol, 1,4-Cyclohexandimethanol und Tripropylenglykol. Geeignete höherwertige Alkohole sind Glycerin, Trimethylolpropan, Ditrimethylolpropan, Pentaerythrit oder Dipentaerythrit. Bevorzugt sind Diole und höherwertige Alkohole, besonders bevorzugt sind Glycerin, Trimethylolpropan, Pentaerythrit, Dipentaerythrit und 1,4-Cyclohexandimethanol.

Geeignete Ester bzw. Urethane sind beispielsweise auch durch Umsetzung ungesättigter OH-funktioneller, ungesättigter Verbindungen mit 2 bis 12, vorzugsweise 2 bis 4 Kohlenstoffatomen sowie wahlweise vorgenannte Alkoholkomponenten mit Säuren, Estern, Säureanhydriden oder Säurechloriden bzw. Isocyanaten zugänglich.

Als hydroxyfunktionelle Acrylate oder Methacrylate kommen beispielsweise Verbindungen wie 2-Hydroxyethyl(meth)acrylat, Polyethylenoxid-mono(meth)acrylate, Polypropylenoxid-mono-(meth)acrylate, Polyalkylenoxidmono(meth)acrylate, Poly(s-caprolacton)-mono-(meth)acrylate, wie z.B. Tone^{®} M100 (Dow, Schwalbach, DE), 2-Hydroxypropyl(meth)acrylat, 4-Hydroxybutyl(meth)acrylat, 3-Hydroxy-2,2-dimethylpropyl(meth)-acrylat, die hydroxy-funktionellen Mono-, Di- oder Tetraacrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische in Betracht.

Beispiele für bevorzugte ungesättigte OH-funktionelle Verbindungen sind Hydroxyethyl-(meth)acrylat, 2- und 3-Hydroxypropyl(meth)acrylat, 2-, 3- und 4-Hydroxy-butyl-(meth)-acrylat, weiterhin OH funktionelle Vinylether, wie z.B. Hydroxybutylvinylether sowie deren Mischungen.

Desweiteren können als OH-funktionelle ungesättigte Verbindungen OH-funktionelle (Meth)acrylsäureester bzw. -amide eingesetzt werden, die durch Umsetzung von bis zu n-1 Äquivalenten (Meth)acrylsäure mit n-wertigen Alkoholen, Aminen, Aminoalkoholen und/oder deren Gemischen erhältlich sind. Als n-wertige Alkohole kommen dabei Glycerin, Trimethylolpropan und/oder Pentaerythrit in frage.

Ebenfalls können Produkte aus der Umsetzung von epoxyfunktionellen (Meth)acrylsäurestern mit (Meth)Acrylsäure verwendet werden. So ergibt die Umsetzung von Glycidylmethacrylat mit Acrylsäure einen gemischten Acrylsäure-Methacrylsäureester des Glycerins, der besonders vorteilhaft verwendet werden kann.

Zur Darstellung von Urethanen aus diesen OH-funktionellen ungesättigten Verbindungen können Mono-, Di- oder Polyisocyanate verwendet werden. Dazu eignen sich isomere Butylisocyanate, Butylendiisocyanat, Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenyl-methan-4,4',4"-triisocyanat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben.

Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat, Isophorondiisocyanat und der isomeren Bis(4,4'-isocyanatocyclohexyl)methane sowie deren Mischungen. Bevorzugt sind die oligomeren Isocyanurate, Uretdione, Allophanate und Iminooxadiazindione des HDI, die oligomeren Isocyanurate, Uretdione und Allophanate des IPDI sowie die oligomeren Isocyanurate der isomeren Bis(4,4'-isocyanatocyclohexyl)methane sowie deren Mischungen.

Analog der obigen Beschreibung sind geeignete Polyester, Polycarbonate oder Polyurethane beispielsweise durch Umsetzung ungesättigter OH-funktioneller Verbindungen mit 2 bis 12, vorzugsweise 2 bis 4 Kohlenstoffatomen mit beispielsweise Säure-, Ester- oder Säurechlorid-funktionellen Polyestern oder Polycarbonaten oder NCO-funktionellen Polyurethanen zugänglich.

Geeignet sind auch Umsetzungsprodukte von Polyestern mit Säurezahlen >5 und glycidylfunktionellen (Meth-)acrylaten (z.B. Glycidylmethacrylat).

Bevorzugt als OH-funktionelle ungesättigte Verbindungen zum Aufbau ungesättigter Polyester, Polycarbonate und Polyurethane sind Hydroxyethylacrylat und die isomeren Hydroxypropylacrylate. Besonders bevorzugt ist das Umsetzungprodukt aus Glycidylmethacrylat und Acrylsäure.

Polyacrylate können nur nach der Polymerisation der Acrylat- und Vinylaromatenmonomere strahlenhärtend modifiziert werden. Dies gelingt über funktionelle Gruppen, die inert gegenüber den Herstellungsbedingungen des Polyacrylats sind und anschließend erst zu ungesättigten strahlenhärtenden Gruppen weiter modifiziert werden.

**Geeignete Gruppen hierzu sind beispielsweise die in der folgenden Tabelle aufgeführten:**

| Inerte Gruppe | Modifizierungsreagenz | Strahlenhärtende Gruppe |
|---|---|---|
| Epoxy | Acrylsäure, dimere Acrylsäure dimere Acrylsäure | Acrylat |
| Säure | Glycidylmethacrylat | Methacrylat |
| Säure | Hydroxyalkylacrylat | Acrylat |
| Alkohol | Maleinsäureanhydrid | Maleinat |
| Alkohol | Acrylsäure, dimere Acrylsäure | Acrylat |
| Alkohol | Acrylfunktionelles Isocyanat | Urethanacrylat |
| Isocyanat | Hydroxyalkylacrylat | Urethanacrylat |
| Anhydrid | Hydroxyalkylacrylat | Acrylat |

Von den Polyacrylaten sind die Diacrylate wie Hexandioldiacrylat bevorzugt.

Aus den obengenannten Verbindungen sind die Ausgangsverbindungen zur Herstellung der Verbindungen der Komponente A jeweils so zu wählen, dass die resultierenden Verbindungen eine Molmasse größer 450 g/mol besitzen und jeweils mindestens zwei funktionelle Gruppen tragen, die durch Einwirkung aktinischer Strahlung mit ethylenisch ungesättigten Verbindungen unter Polymerisation reagieren, und keine Isocyanat-Gruppen aufweisen.

Bevorzugt werden Urethanacrylate hergestellt aus vorgenannten Hydroxyalkylacrylaten, Diolen bzw. Polyolen und aliphatischen Diisocyanaten bzw. Polyisocyanaten eingesetzt, die mindestens eine Allophanat-Gruppe, HDI-Trimerisat-Gruppe, Biuret-Gruppe, Uretdion-Gruppe und / oder Isocyanurat-Gruppe im Molekül aufweisen. Besonders bevorzugt werden Urethanacrylate auf Basis von HDI-Trimerisaten, wie z.B. in Desmolux^{®} U680H von der Bayer MaterialScience AG enthalten, sowie Urethanacrylate auf Basis von Allophanaten, wie z.B. in Desmolux^{®} XP 2666 von der Bayer MaterialScience AG enthalten, eingesetzt.

### Komponente B

Die Herstellung und Verwendung geeigneter Reaktivverdünner gemäß Komponente B sind bekannt und beispielsweise in Chemistry & Technology of UV & EB Formulation for Coatings, Inks & Paints, Vol. 2, 1991, SITA Technology, London (P.K.T: Oldring (Ed.) auf S.237-306 (Reactive Diluents) sowie im Römpp Lexikon Chemie, S.491, 10. Aufl. 1998, Georg-Thieme-Verlag, Stuttgart beschrieben. Geeignet im erfmdungsgemäßen Sinne sind hier beispielsweise Methandioldiacrylat, 1,2-Ethandioldiacrylat, 1,3-Propandioldiacrylat, 1,2-Propandioldiacrylat, Glycerintriacrylat, 1,4-Butandioldiacrylat, 1,3-Butandioldiacrylat, 1,2,4-Butantrioltriacrylat, 1,5-Penandioldiacrylat, Neopentylglykoldiacrylat, Pentaerythritoltriacrylat, Pentaerythritoltetraacrylat, 1,6-Hexandioldiacrylat, Trimethylolpropandiacrylat, Trimethylolpropantriacrylat, Tricyclodecandimethanoldiacrylat, Diethylenglykoldiacrylat, Triethylenglykoldiacrylat, Tetraethylenglykoldiacrylat, Dipropylenglykoldiacrylat, Tripropylenglykoldiacrylat, Trimethylolpropantriethoxytriacrylat, Dipentaerythritolpentaacrylat, Dipentaerythritolhexaacrylat, Ditrimethylolpropantetraacrylat und die entsprechenden Methacrylatderivate bzw. deren Mischungen.

Bevorzugt werden 1,6-Hexandioldiacrylat, Tricyclodecandimethanoldiacrylat, Trimethylolpropantriacrylat, Pentaerythritoltetraacrylat und deren Methacrylatderivate und / oder Mischungen der vorgenannten Reaktivverdünner eingesetzt.

Besonders bevorzugt wird 1,6-Hexandioldiacrylat eingesetzt.

### Komponente C:

Als Ausgangsverbindungen zur Herstellung der Komponente C werden aromatische, araliphatische, aliphatische und cycloaliphatische Di- oder Polyisocyanate verwendet. Es können auch Mischungen solcher Di-oder Polyisocyanate eingesetzt werden. Beispiele geeigneter Di-oder Polyisocyanate sind Butylendiisocyanat, Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)-methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat, Isophorondiisocyanat und der isomeren Bis(4,4'-isocyanatocyclohexyl)methane sowie deren Mischungen. Bevorzugt sind die oligomeren Isocyanurate, Uretdione, Allophanate und Iminooxadiazindione des HDI, des IPDI und/oder der isomeren Bis(4,4'-isocyanatocyclohexyl)methane sowie deren Mischungen. Besonders bevorzugt sind die oligomeren Isocyanurate, Uretdione und Allophanate des IPDI sowie die oligomeren Isocyanurate der isomeren Bis(4,4'-isocyanatocyclohexyl)methane.

Sofern die oben genannten Isocyanate keine isocyanat-reaktiven ethylenisch ungesättigte Funktionalitäten enthalten, sind sie ganz oder teilweise mit isocyanat-reaktiven ethylenisch ungesättigten Verbindungen umgesetzt zu verwenden. Bevorzugt werden hierzu α,β-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt, besonders bevorzugt sind dies Acrylate und Methacrylate mit mindestens einer isocyanatreaktiven Gruppe. Als hydroxyfunktionelle Acrylate oder Methacrylate kommen beispielsweise Verbindungen wie 2-Hydroxyethyl(meth)acrylat, Polyethylenoxid-mono(meth)acrylate, Polypropyle-noxidmono(meth)-acrylate, Polyalkylenoxidmono(meth)acrylate, Poly("epsilon"-caprolacton)mono(meth)-acrylate, wie z.B. Tone^{®} M100 (Dow, USA), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di-oder Tetra(meth)acrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipenta-erythrit oder deren technische Gemische in Betracht. Darüberhinaus sind isocyanat-reaktive oligomere oder polymere ungesättigte Acrylat- und/oder Methacrylatgruppen enthaltende Verbindungen alleine oder in Kombination mit den vorgenannten monomeren Verbindungen geeignet.

Es ist gegebenenfalls auch möglich, die vorgenannten Isocyanate bzw. umgesetzten Isocyanate teilweise mit dem Fachmann aus der Beschichtungstechnologie bekannten Blockierungsmitteln umgesetzt zu verwenden. Als Beispiele für Blockierungsmittel seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, epsilon-Caprolactam, N-tert.-Butyl-benzylamin, Cyclopentanoncarboxyethylester oder beliebige Gemische dieser Blockierungsmittel.

Als Verbindungen der Komponente C können alle vorgenannten Verbindungen bzw. die Umsetzungsprodukte der vorgenannten Verbindungen einzeln oder in beliebigen Mischungen verwendet werden, unter der Voraussetzung, dass sie mindestens eine Isocyanatgruppe und zusätzlich mindestens eine ethylenisch ungesättigte Funktion, die unter Einwirkung aktinischer Strahlung mit ethylenisch ungesättigten Verbindungen unter Polymerisation reagiert, aufweisen.

Bevorzugt werden Isocyanatgruppen-haltige Acrylate wie Desmolux® D100 (Bayer MaterialScience AG) oder Laromer^{®} LR9000 (BASF SE) eingesetzt.

### Komponente D:

Der Einsatz von Lichtschutzmitteln und die verschiedenen Typen sind beispielhaft beschrieben in A. Valet, Lichtschutzmittel für Lacke, Vincentz Verlag, Hannover, 1996.

Lichtschutzmittel im erfindungsgemäßen Sinne sind Derivate des Triazins, vorzugsweise Derivate des Biphenyltriazins. Besonders bevorzugt werden Lichtschutzmittel gemäß der nachfolgenden Formel (I) eingesetzt, 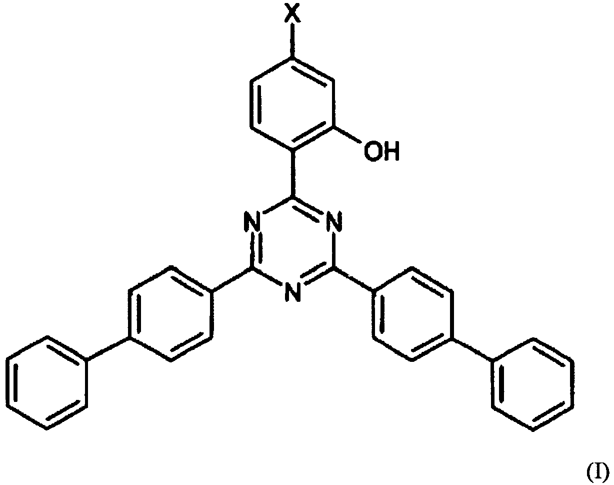 wobei
X = OR6, OCH2CH20R6, OCH2CH(OH)CH20R6 oder OCH(R7)COOR8, bevorzugt OCH(R7)COOR8,
R6 = verzweigtes oder unverzweigtes C1-C13-Alkyl, C2-C20-Alkenyl, C6-C12-Aryl oder -CO-C1-C18-Alkyl,
R7 = H oder verzweigtes oder unverzweigtes C1-C8-Alkyl, bevorzugt CH3 und
R8 = C1-C12-Alkyl; C2-C12-Alkenyl oder C5-C6-Cycloalkyl, bevorzugt C8H17 sind.

Besonders bevorzugt wird als Komponente D ein Lichtschutzmittel gemäß der Formel (I) mit X = OCH(R7)COOR8, R7 = CH3 und R8 = C8H17 (UV-Absorber CGL479 der Firma Ciba Speciality Chemicals) eingesetzt.

Die biphenylsubstituierten Triazine der allgemeinen Formel (I) sind aus WO-A 96/28431; DE-A 197 39 797; WO-A 00/66675; US 6,225,384; US 6,255,483; EP-A 1 308 084 und DE-A 101 35 795 prinzipiell bekannt.

In einer bevorzugten Ausführungsform weisen die Lichtschutzmittel eine hohe UV-Absorption im Bereich der größten Empfindlichkeit der Substratschicht auf, besonders bevorzugt besitzen die Lichtschutzmittel ein UV-Absorptionsmaximum zwischen 300-340 nm.

Weiterhin können eingesetzt werden alle geeigneten organischen Lichtschutzmittel, beispielsweise Benzophenone, Benzotriazole, Oxalsäureanilide, Cyanoacrylate sowie die Derivate der vorgenannten Lichtschutzmittel und Mischungen aus allen vorgenannten Lichtschutzmitteln in beliebigem Mischungsverhältnis. Beispiele für kommerziell erhältliche UV Absorber sind unter anderem Sanduvor 3206 (Clariant AG), Tinuvin 400, Tinuvin 405 sowie Tinuvin 479 (Ciba AG).

Die Zugabemenge sollte so gewählt werden, dass eine möglichst hohe Extinktion im Bereich des UV-Absorptionsmaximums zwischen 300 - 340 nm resultiert. Zugabemengen der Komponente D liegen im Bereich zwischen 0,01 % und 10,0 %, bevorzugt 0,1 % bis 7,0 % und besonders bevorzugt im Bereich zwischen 0,2 % und 5,0 %.

### Komponente E:

Fotoinitiatoren sind durch aktinische Strahlung aktivierbare Initiatoren, die eine radikalische Polymerisation der entsprechenden polymerisierbaren Gruppen auslösen. Es können übliche, kommerziell erhältliche Fotoinitiatoren eingesetzt werden, wobei zwischen unimolekularen (Typ I) und bimolekularen (Typ II) Initiatoren unterschieden wird. (Typ I)-Systeme sind z.B. aromatische Ketonverbindungen, wie Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiterhin geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Je nach zur Härtung verwendeter Strahlungsquelle muss Typ und Konzentration an Fotoinitiator in dem Fachmann bekannter Weise angepasst werden, dabei kann es auch vorteilhaft sein, Gemische dieser Verbindungen einzusetzen. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben. Geeignete Initiatoren sind kommerziell erhältlich beispielsweise unter der Bezeichnung Irgacure^{®} und Darocur^{®} (Ciba, Basel, CH) sowie Esacure^{®} (Fratelli Lamberti, Adelate, IT) und Lucirin^{®} (BASF, Deutschland).

Bevorzugt werden 1-Hydroxy-cyclohexyl-phenyl-keton (Irgacure^{®} 184 der Ciba, Basel, CH) und 2,4,6-Trimethylbenzoylphenyl-phosphinsäureethylester (Lucirin^{®} TPO-L der BASF AG) in beliebigem Mischungsverhältnis und in einer Gesamtmenge von 1 - 10 Gew.-% eingesetzt.

### Komponente F:

Als Komponente F können in der Technologie der Lacke, Farben, Druckfarben, Dichtstoffe und Klebstoffe übliche Zusätze oder Hilfsmittel enthalten sein.

Insbesondere sind dies Stabilisatoren wie sterisch gehinderte Amine (HALS), weiterhin Antioxidantien sowie Lackhilfsmittel, z.B. Antiabsetzmittel, Entschäumungs- und/oder Netzmittel, Verlaufmittel, Weichmacher, Katalysatoren, Hilfslösemittel und/oder Verdicker sowie Pigmente, Farbstoffe und/oder Mattierungsmittel.

Als Komponente F können weiterhin unfunktionelle Polymere und Füllstoffe zur Einstellung der mechanischen und optischen Eigenschaften enthalten sein. Hierzu eignen sich alle Polymere und Füllstoffe, die mit dem Beschichtungsmittel verträglich und mischbar sind. Die Verbindungen der Komponente F können sowohl als Bulkmaterial als auch in Form von Partikeln mit mittleren Durchmessern im Bereich zwischen einem und 10000 Nanometern, bevorzugt im Bereich von einem bis 500 Nanometern, besonders bevorzugt im Bereich von zwei bis 200 Nanometern, eingesetzt werden.

Als polymere Zusatzstoffe kommen Polymere wie beispielsweise Polyacrylate, Polycarbonate, Polyurethane, Polyolefine, Polyether, Polyester, Polyamide und Polyharnstoffe in Frage.

Als Füllstoffe können mineralische Füllstoffe, Glasfasern und/oder metallische Füllstoffe, wie sie in gängigen Rezepturen für sogenannte Metalliclackierungen zum Einsatz kommen, verwendet werden.

### Thermoplastisches Substrat / Thermoplastische Substratschichten:

Als Kunststoff für die Matrix der Substratschicht bzw. der Substratschichten des Formkörpers kommen alle transparenten Thermoplaste in Frage: Polyacrylate, Poly(meth)acrylate (z.B. PMMA; z.B. Plexiglas® von der Fa. Röhm), Cycloolefin-Copolymere (COC; z.B. Topas® von der Fa. Ticona; Zenoex® von der Fa. Nippon Zeon oder Apel® von der Fa. Japan Synthetic Rubber), Polysulfone (Ultrason® von der BASF oder Udel® von der Fa. Solvay), Polyester, wie z.B. PET oder PEN, Polycarbonat (PC), Polycarbonat/Polyester-Blends, z.B. PC/PET, Polycarbonat/Polycyclohexylmethanolcyclohexandicarboxylat (PCCD; Xylex® von der Fa. Sabic Innovative Plastics), Polycarbonat/PBT und Mischungen daraus.

Bevorzugt werden Poly(meth)acrylate sowie Polycarbonate eingesetzt, und insbesondere werden Polycarbonate und deren Mischungen eingesetzt.

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Die geeigneten Polycarbonate haben bevorzugt mittlere Molekulargewichte M̅_{w} von 18.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Die Herstellung der Polycarbonate erfolgt vorzugsweise nach dem Phasengrenzflächenverfahren oder dem Schmelze-Umesterungsverfahren, welche mannigfaltig in der Literatur beschrieben werden. Zum Phasengrenzflächenverfahren sei beispielhaft auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden aus Reaktionen von Bisphenolverbindungen mit Kohlensäureverbindungen, insbesondere Phosgen oder beim Schmelzeumesterungsprozess Diphenylcarbonat bzw. Dimethylcarbonat, erhalten. Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt. Weitere Bisphenolverbindungen, die sich für die Polycarbonatsynthese einsetzen lassen, sind unter anderem offenbart in WO-A 2008037364, EP-A 1 582 549, WO-A 2002026862, WO-A 2005113639.

Die Polycarbonate können linear oder verzweigt sein. Es könne auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009, DE-A 25 00 092, DE-A 42 40 313, DE-A 19 943 642, US-B 5 367 044 sowie in hierin zitierter Literatur. Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP-A 1 506 249 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Kunststoffzusammensetzung(en) der Substratschicht bzw. der Substratschichten können zusätzlich Additive, wie beispielsweise UV-Absorber, IR-Absorber sowie andere übliche Verarbeitungshilfsmittel, insbesondere Entformungsmittel und Fließmittel, sowie die üblichen Stabilisatoren, insbesondere Thermostabilisatoren sowie Antistatika, Pigmente, Farbmittel und optische Aufheller enthalten. In jeder Schicht können dabei unterschiedliche Additive bzw. Konzentrationen von Additiven vorhanden sein.

In einer bevorzugten Ausführungsform wird als Kunststoff Polycarbonat eingesetzt, welches zusätzlich 0,01 bis 0,5 Gewichts-% eines oder mehrerer UV-Absorber aus den Klassen Benzotriazol-Derivate, dimere Benzotriazol-Derivate, Triazin-Derivate, Dimere Triazin-Derivate, Diarylcyanoacrylate enthält.

In einer Ausführungsform sind in weiteren Substratschichten, z.B. in gegebenenfalls vorhandene(n) Koextrusionsschicht(en), höhere Mengen an Additiven, insbesondere an UV-Absorbern, enthalten.

### Herstellung des Substrats:

Die erfindungsgemäßen Kunststoffzusammensetzungen, enthaltend den thermoplastischen Kunststoff und gegebenenfalls weitere Additive, können durch Spritzguss oder durch Extrusion zu dem Substrat enthaltend die Substratschichten verarbeitet werden.

Wenn es sich bei dem Substrat um großflächige Platten handelt, kann die Erzeugung durch Spritzguss aus technischen Gründen nicht wirtschaftlich erfolgen. In diesen Fällen ist das Extrusionsverfahren zu bevorzugen. Zur Extrusion wird das thermoplastische Granulat dem Extruder zugeführt und im Plastifizierungssystem des Extruders aufgeschmolzen. Die Kunststoffschmelze wird durch eine Breitschlitzdüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion des jeweiligen Thermoplasten notwendigen Temperaturen eingestellt, wobei üblicherweise den Herstellerangaben gefolgt werden kann. Die zur Extrusion verwendeten Polycarbonate mit hoher Schmelzeviskosität werden z.B. normalerweise bei Schmelzetemperaturen von 260 bis 320 °C verarbeitet, entsprechend werden die Zylindertemperaturen des Plastifizierzylinders sowie die Düsentemperaturen eingestellt.

### Koextrusion

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Koextrusion siehe beispielsweise EP-A 0 110 221, EP-A 0 110 238 und EP-A 0 716 919, für Details des Adapter- und Düsenverfahrens siehe Johannaber/Ast:"Kunststoff Maschinenführer", Hanser Verlag, 2000 und in Gesellschaft Kunststofftechnik: "Koextrudierte Folien und Platten: Zukunftsperspektiven, Anforderungen, Anlagen und Herstellung, Qualitätssicherung", VDI-Verlag, 1990).

Für die Koextrusion werden bevorzugt Polycarbonate und Poly(meth)acrylate eingesetzt. Besonders bevorzugt werden Polycarbonate eingesetzt.

### Herstellung des Beschichtungsmittels:

Die Herstellung der Beschichtungsmittelzusammensetzungen erfolgt nach den vom Fachmann bekannten Verfahren. Eine Übersicht über gängige Herstellverfahren findet sich zum Beispiel im Lehrbuch der Lacktechnologie (Brock, Groteklaes, Mischke - Vincentz Verlag, 2. Auflage 2000, Seite 229ff.) oder im Lehrbuch der Lacke und Beschichtungsstoffe, Band 8 - Herstellung von Lacken und Beschichtungsstoffen (Kittel, Hirzel Verlag, 2. Auflage 2005).

Am gängigsten findet die Herstellung unter Rühren statt. Hierbei werden alle Komponenten nacheinander in eine Vorlage gegeben und unter stetigen Rühren homogenisiert. Um den Homogenisierungsprozess zu beschleunigen, können die Mischungen erwärmt werden.

### Applikation:

Die Applikation der lösungsmittelfreien Beschichtungsmittelzusammensetzungen erfolgt inline direkt nach der Herstellung des thermoplastischen Formkörpers. Prinzipiell können alle gängigen Methoden der Applikation von Beschichtungsmitteln auf Substrate, wie Sprühen, Fluten, Gießen Rakeln oder Walzen, angewandt werden. Bevorzugt ist das Rakeln, Gießen und Walzen zu nennen, besonders bevorzugt das Rakeln und Walzen, und ganz besonders bevorzugt ist das Walzen zu nennen.

Beim Walzen bzw. der Walzapplikation wird das Beschichtungsmittel über eine oder mehrere Walzen an das Substrat angetragen. Je nach Wahl des Walzenmaterials sowie der Walzenoberflächenstruktur ist die resultierende Oberflächengüte zu steuern. Walzen können im Gleichlauf oder aber entgegengesetzt zum Förderweg des Formkörpers gefahren werden. Die Auftragsmenge des Beschichtungsmittels auf den Formkörper wird über Pumpenfördermengen sowie über die verwendeten Walzenspalte reguliert. Weiterhin haben die Umdrehungsgeschwindigkeiten der Antragswalze und der Aufnahmewalze sowie das Verhältnis der Umdrehungsgeschwindigkeiten zueinander einen Einfluss auf die resultierende Auftragsmenge.

Einen Überblick über die unterschiedlichen Antragsverfahren mit Walzen am Beispiel der Bandbeschichtung gibt das Buch "Coil Coating - Bandbeschichtung: Verfahren, Produkte und Märkte" (Meuthen, Jandel - Vieweg Verlag, 2. Auflage, 2007, S. 115ff.). Die hier beschriebenen Antragssysteme der Walzlackierung sind prinzipiell auf flache Substrate aus Holz oder Kunststoff übertragbar.

### Trocknung und Haftung:

Das zuvor applizierte Beschichtungsmittel bildet nun auf dem Substrat eine homogene, noch ungehärtete Schutzschicht. In Abhängigkeit der Beschichtungsmittelbestandteile sowie dessen Gehalte penetrieren niederviskose Bestandteile, wie Komponenten B, in die obere Grenzschicht des Substrat ein und bilden eine sogenannte Interpenetrationsschicht (IPL) aus.

Die Substrattemperaturen sollten vor der Applikation des Beschichtungsmittels bevorzugt bei 60-90°C, besonders bevorzugt bei 75-85°C liegen und 90°C nicht überschreiten. Das Beschichtungsmittel sollte im Laufe des Prozesses eine Temperatur von ca. 40 °C haben. Durch die kontinuierliche Zuführung des Beschichtungsmittels zum Auftragsaggregat und durch das im Kreislaufführen des überschüssigen Materials wird nach kurzer Zeit die Temperatur von ca. 40°C erreicht. Ein Temperaturbereich von etwa 30-50 °C hat sich als bevorzugt herausgestellt, was die Handhabung der Zusammensetzung und die Güte der Oberfläche der Schutzschicht betrifft. Je nach genauer Zusammensetzung des Beschichtungsmittels kann sich für die Applikation optimale Temperaturbereich in Grenzen verschieben. Ohne weitere Erwärmung kühlt das beschichtete Formteil in kurzer Zeit nach dem Applikationsschritt ab. Bevorzugt wird das beschichtete Formteil bis zur abschließenden Härtung jedoch weiterhin erwärmt. Vorzugsweise sollte hierbei die Temperatur des beschichteten Formteils zwischen 40 und 90°C liegen, besonders bevorzugt zwischen 60 und 80°C und ganz besonders bevorzugt zwischen 70 und 80°C. Für die Erwärmung bieten sich stationäre Umluftdurchlauföfen oder IR-Felder zum Beheizen des beschichteten Formkörpers an.

Die Extrusionsgeschwindigkeit, die ein Maß für die Verweilzeit ist, ist so anzupassen, dass sich in Summe eine ausreichende Haftung ergibt. Die Extrusionsgeschwindigkeit, bezogen auf die Herstellung des Substrats, 1 - 7 m/min, bevorzugt 1 - 4 m/min, besonders bevorzugt 1 - 2,5 m/min. Ein entsprechendes Haftungskriterium kann in Anlehnung an die ASTM D3359 erfolgen und in keinerlei Enthaftung der Beschichtung nach einem Gitterschnitt mit anschließendem Tape-Abriss begründet sein. Ein weiteres verschärftes Haftungskriterium wäre keinerlei Enthaftung nach der Lagerung der zuvor geprüften Beschichtung in kochendem Wasser für 2 bis 4 Stunden nach der Wiederholung des Tape-Abrisses.

Im Anschluss an die Verweilzeit wird das Beschichtungsmittel auf dem Formteil gehärtet.

### Härtung:

Unter Härtung mit aktinischer Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den oben beschriebenen Fotoinitiatoren freigesetzt werden. Unter "aktinisch" versteht man dabei die Fähigkeit von Strahlung, bestimmte Stoffe chemisch zu verändern.

Bei der aktinischen Strahlung handelt es sich bevorzugt um energiereiche UV-Strahlung oder Tageslicht, z.B. Licht der Wellenlänge 200 bis 750 nm, oder um Bestrahlung mit energiereichen Elektronen (Elektronenstrahlung, 90 bis 300 keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z.B. unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise (eine entsprechende Übersicht bietet das Buch "Strahlenhärtung" von Peter G. Garratt, Vincentz Verlag, 1996) oder durch orientierende Vorversuche zu variieren bzw. zu optimieren. Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Weiterhin kann es je nach eingesetztem Formkörper vorteilhaft sein, die Bestrahlungsbedingungen so zu wählen, dass die thermische Belastung des Formkörpers nicht zu groß wird. Insbesondere dünne Formkörper sowie Formkörper aus Materialien mit niedriger Glasübergangstemperatur neigen zur unkontrollierten Verformung, wenn durch die Bestrahlung eine bestimmte Temperatur überschritten wird. In diesen Fällen ist es vorteilhaft, durch geeignete Filter oder Bauart der Strahler möglicht wenig Infrarotstrahlung auf das Substrat einwirken zu lassen. Weiterhin kann durch Reduktion der entsprechenden Strahlendosis der unkontrollierten Verformung entgegengewirkt werden. Dabei ist jedoch zu beachten, dass für eine möglichst vollständige Polymerisation eine bestimmte Dosis und Intensität der Bestrahlung notwendig sind. Es ist in diesen Fällen besonders vorteilhaft unter inerten oder Sauerstoffreduzierten Bedingungen zu härten, da bei Reduktion des Sauerstoffanteils in der Atmosphäre oberhalb der Beschichtung die erforderliche Dosis zur Aushärtung abnimmt.

Besonders bevorzugt werden zur Härtung Quecksilberstrahler in ortsfesten Anlagen eingesetzt. Fotoinitiatoren werden dann in Konzentrationen von 1 bis 10 Gew.-% bezogen auf den Festkörper der Beschichtung eingesetzt.

Die Härtung der erfindungsgemäßen Beschichtungen, enthaltend einer oder mehrere der unter Komponente E aufgeführten Fotoinitiatoren, erfolgt bevorzugt mit einer Strahlungs-Dosis von 500 bis 4000 mJ/cm2, gemessen im Wellenlängebereich von 200 bis 600 nm. Während der Bestrahlung sollte die Substrattemperatur 90°C nicht überschreiten.

### Funktionale Schichten

Optional kann auf einer Seite des Formkörpers eine sogenannte wasserspreitende Schicht aufgebracht sein, die anhaftendes Wasser, besonders anhaftende Wassertropfen spreitet, wodurch die Sicht durch den oberflächenmodifizierten Formkörper weiterhin ermöglicht wird.

Wasserspreitende Schichten und ihre Herstellung sind beispielsweise in der DE-A 19829165 oder in WO 2009/010193 A beschrieben.

Das mehrschichtige Erzeugnis kann außerdem weitere Schichten enthalten. Es kommen als weitere Beschichtungen beispielsweise IR-absorbierende Schichten, IR-reflektierende Schichten, UV-absorbierende Schichten, elektrisch leitfähige Schichten, elektroluminisizierende Schichten, Farb- und Druckschichten zu Dekorationszwecken, elektrisch leitfähige Druckschichten, wie sie z.B. für Automobilscheibenheizung verwendet werden, Antireflexionsschichten, no-drop-Beschichtungen, anti-fog-Beschichtungen, antifingerprint-Beschichtungen, Beschichtungen gegen Algen-, Pilz- sowie Moosbefall, Beschichtungen, die einen easy-to-clean-Effekt, self-cleaning-Effekt, anti-graffiti-Effekt, staub- sowie schmutzabweisenden Effekt oder eine spezielle Haptik bieten, und/oder Kombinationen davon in Betracht. Diese Beschichtungen können als Zwischenschichten und/oder Außenschichten aufgebracht bzw. enthalten sein.

### Anwendungen

Die erfindungsgemäßen Erzeugnisse sind Folien, Platten, wie z.B. Massivplatten oder Stegplatten, hergestellt durch Extrusion und anschließender Beschichtung. Anwendungen der Erzeugnisse finden sich in den Bereichen Architekturverscheibung, insbesondere Bedachungen und Verglasungen von Schwimmbädern, Carports, Gewächshäusern, Industriekomplexen und privaten Gebäuden, Automobilverscheibung sowie Lärmschutz- und Sichtschutzwände. Bevorzugte Erzeugnisse, die nach dem erfindungegemäßen Verfahren erhältlich sind, ist die Stegplatte mit bevorzugt 2 bis 8, insbesondere 2 bis 4 Stegen, die insbesondere für Dachanwendungen. in planarer oder gebogener Form (z.B. als "barrel vaults") eingesetzt werden. Die Stegplatte kann sowohl als ganze Platte gebogen oder an einem oder beiden Enden der Platte gebogen sein.

### Beispiele:

**Folgende Rohstoffe bzw. Materialien wurden verwendet:**

| Verwendeter Rohstoff | Typ | Hersteller |
|---|---|---|
| Desmolux^{®} D 100 | Isocyanathaltiges Urethanacrylat | Bayer MaterialScience AG |
| Desmolux^{®} XP 2666 | Urethanacrylat auf Allophanatbasis | Bayer MaterialScience AG |
| Desmolux^{®} U680H | Urethanacrylat auf HDI-Trimerisatbasis | Bayer MaterialScience AG |
| 1,6-Hexandioldiacrylat | 1,6-Hexandioldiacrylat | Aldrich |
| Irgacure 184 | 1-Hydroxy-cyclohexyl-phenyl-keton 2,4,6-Trimethylbenzoylphenyl- | Ciba AG |
| Lucirin TPO-L | phosphinsäureethylester Derivat eines Oxalsäureanilids, | BASF SE |
| Sanduvor 3206 | CAS-Nr. 82493-14-9 | Clariant AG |
| Sanduvor 3058 | Sterisch gehindertes Amin | Clariant AG |
| Tinuvin 479 | Biphenyltriazinderivat | Ciba AG |
| BYK 302 | Polyethermodifiziertes Polydimethylsiloxan | BYK |
| BYK 306 | Polyethermodifiziertes Polydimethylsiloxan | BYK |
| Lexan^{®} Thermoclear Plus 2 UV (Stegdoppelplatte) | Beidseitig lackierte Stegdoppelplatte aus Polycarbonat | Sabic Innovative Plastics |
| Makrolon^{®} Multi UV no drop (Stegdoppelplatte) | Einseitig lackierte Stegdoppelplatte aus Polycarbonat | Bayer Sheet Europe |

### Beispiel 1 (Vergleich)

### a) Herstellung der Beschichtungszusammensetzung

Zuerst wurden in einem Rührgefäß mit Rührer und Rühraggregat 35,3 Teile 1,6-Hexandioldiacrylat vorgelegt. Danach wurden bei 500 U/min nacheinander 2,8 Teile Irgacure 184, 1,0 Teile Sanduvor 3058, 1,0 Teile Sanduvor 3206 und 0,9 Teile BYK 306 nacheinander zugegeben, wobei jeweils solange gerührt wurde, bis das jeweilige Additiv sich homogen gelöst hatte. Danach wurde für 5 Minuten lang gerührt.

Anschließend wurden zu der Additivlösung unter stetigem Rühren 57,8 Teile des Desmolux^{®} U 680 H zugesetzt und die Formulierung für weitere 10 min homogenisiert. Die Viskosität des Beschichtungsmittels betrug bei Raumtemperatur ca. 2500 mPas.

### b) Herstellung des Substrates durch Extrusion

Eine 16 mm dicke und 1 m breite, mit einer einseitigen Koextrusionsschicht versehene Stegdoppelplatte wurden aus folgender Zusammensetzung erhalten:
Als Basismaterial wurde eine Mischung zu gleichen Anteilen bestehend aus Makrolon® 1243 (verzweigtes Bisphenol-A Polycarbonat der Bayer AG, Leverkusen mit einem Schmelzflussindex (MFR) gemäß ISO 1133 von 3,25 g/10 min bei 300°C und 1,2 kg Belastung) und Makrolon® 3103 (verzweigtes Bisphenol-A Polycarbonat der Bayer AG, Leverkusen mit einem Schmelzflussindex (MFR) gemäß ISO 1133 von 6,5 g/10 min bei 300°C und 1,2 kg Belastung) verwendet.

Koextrudiert wurde dieses Material mit einem Polycarbonat auf Basis von Makrolon® M3108 (lineares Bisphenol-A Polycarbonat der Bayer AG, Leverkusen mit einem Schmelzflussindex (MFR) gemäß ISO 1133 von 6,5 g/10 min bei 300°C und 1,2 kg Belastung). Die Dicke der Koextrusionsschicht betrug etwa 50 µm.

Das Material der Koextrusionsschicht enthielt neben 0,25 % Penta-erythrit-tetra-stearat (PETS, im Handel erhältlich als Loxiol® VPG 861 der Fa. Cognis, Düsseldorf, Deutschland) auch einen UV-Absorber auf Basis eines Benzotriazols (2,2'-Methylen-bis(6-(2H-benzotriazol-2-yl)-4-1,1,3,3-tetramethyl-butyl)phenol, im Handel erhältlich bei der Fa. Ciba, Schweiz, als Tinuvin 360®).

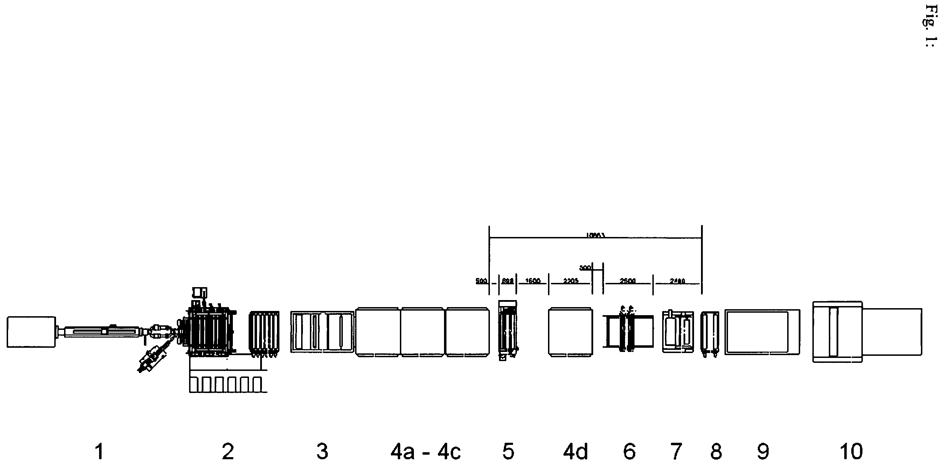

Die koextrudierten Polycarbonatstegplatten wurden mit Hilfe der in Figur 1 dargestellten Koextrusions- und Beschichtungsanlage hergestellt.

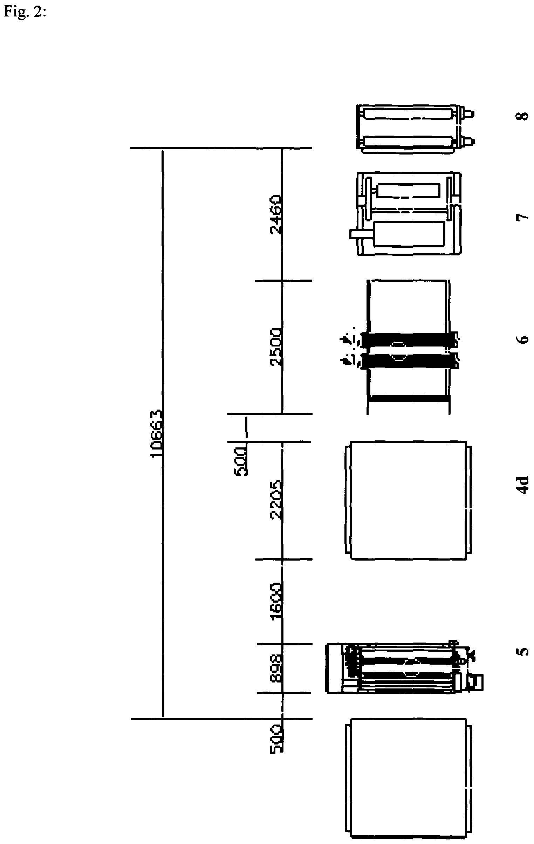

Die Anlage bestand aus folgenden Maschinen und Apparaten (Kennziffern bezeichnen die entsprechenden Anlagenteile in Fig. 1 bzw. Fig. 2):
**1** Extrusionseinheit, bestehend aus:
   - einem Einschneckenextruder (Entgasungsextruder, Schneckendurchmesser 120 mm und einer Einschnecke der Länge 33 D, Einschnecke, Fa. Reifenhäuser, Omipa /Italien). Der Extruder ist mit einer Vakuum-Schmelzeentgasung ausgerüstet.
   - einem 2-Schicht Koextrusionsadapter (Festadapter der Fa. Bexsol, Switzerland )
   - einem 4-Zonen-Koextruder (Schneckendurchmesser 30 mm, Einschnecke der Länge 22 D, Fa. Gimat, Italien)
   - einer Stegplattendüse der Breite 1250 mm, für Stegplattendicken von 4 bis 40 mm der Fa. Bexsol, Switzerland
**2** - einem dreiteiligen Vakuumkalibrator, Breite 1500 mm, Länge 3x650 mm, Fa. Bexsol, Switzerland
**3/8** zwei Abzugseinrichtungen, der erste Abzug **3** (6 Rollen) befindet sich vor den Ofenmodulen **4a** - **c** und der zweite Abzug **8** (2 Rollen) nach dem Equipment zur Beschichtung **5** (Fa. BGplast / Italien)
**7** Maskiereinheit (Maskierung der Platte mit Schutzfolie)
**4a - d** vier Ofenmodule zu jeweils 2m Länge (I.G.M. Linea / Italien)
**9-10** Transport und Ablängen, Quertrenneinrichtung mit Warmmesser (Fa. BGplast / Italien)

Die einseitig mit einer Koextrusionsschicht versehene Stegplatte wurde wie folgt hergestellt: Das Polycarbonat-Granulat des Basismaterials wurde dem Fülltrichter des Hauptextruders zugeführt, das Koextrusionsmaterial dem des Koextruders. Im jeweiligen Plastifiziersystem Zylinder/Schnecke erfolgte das Aufschmelzen und Fördern des jeweiligen Materials. Beide Materialschmelzen wurden im Koexadapter zusammengeführt und bildeten nach Verlassen der Düse und Abkühlen einen Verbund. Die weiteren Einrichtungen dienten dem Transport, Ablängen und Ablegen der extrudierten Platten.

Die Temperaturen der einzelnen Gehäuse des Hauptextruders lagen bei 240°C bis 280°C und die resultierende Massetemperatur bei 285°C bis 295°C. Die Schmelzepumpendrehzahl betrug 23 U/min. Die Abzugsgeschwindigkeit lag bei 1,5 m/min. Die Gehäusetemperaturen des Koextruders lagen bei 245°C bis 260°C und die resultierende Massetemperatur bei ca. 265°C. Die Schmelzepumpendrehzahl betrug 10 U/min.

### c) Inline Applikation des Beschichtungsmittels

Analog Fig. 1 und 2 erfolgte die Installation eines Walzenantragsaggregates der Fa. Sorbini nach den zur Temperierung dienenden Ofenmodulen 4a - 4d) inline in die dargestellte Extrusionsanlage. Die Walzenbreite der aus EPDM (Ethylen-Propylen-Dien-Kautschuk) bestehenden, nicht beheizten Antragswalze belief sich zu 1,3 m. Figur 2 zeigt den Beschichtungsteil der Anlage im Detail, die eingetragenen Maße sind in der Einheit mm.

Die Substrattemperatur der Stegplatte belief sich bei einer Extrusionsgeschwindigkeit von 1,5 m/min und einem Temperaturprofil in der 3-Ofenzone (Modul1 → 130°C; Modul2 → 120°C; Modul3 → 85°C; Ofenlänge je Ofen → 2,0m) zu ca. 85 bis 90°C, die mit Teststreifen der Firma ReaTec ermittelt wurde.

Bei einer Umdrehungsgeschwindigkeit von 2,4 m/min für die Antragswalze **5** im Revers-Verfahren sowie 13,4 m/min für die Dosierwalze resultierte bei einer Beschichtungsmitteltemperatur von ca. 45°C eine Gesamtlackschichtdicke von 15 µm auf dem temperierten Substrat.

Der Abstand zwischen der Antragswalze **5** sowie dem Cefla UV-Kanal **6,** der bei einer Lampenbreite von 1,4 m eine Leistung des Hg-Strahlers von 80 W/cm aufwies, betrug 6 m. Zum Aufrechterhalten der Temperatur des beschichteten Substrates vor der bevorstehenden Härtung des Beschichtungsmittels auf dem Substrat wurde das 2 m lange Ofenmodul **4d** zwischen dem Walzenantragsaggregat und dem UV-Kanal positioniert und mit einer Solltemperatur von 100°C beaufschlagt, so dass eine Substrattemperatur von ca. 85°C bis 90°C resultierte.

Das erwärmte Beschichtungsmittel wurde auf dem Substrat bei der gegebenen Extrusionsgeschwindigkeit von 1,5 m/min mit einer UV-Härtungsdosis von 870 mJ/cm² mittels des Hg-Strahlers des UV-Kanals zu einer duroplastischen Schutzschicht gehärtet. Die Beschichtung zeichnete sich durch einen guten Verlauf und eine hervorragendes optisches Erscheinungsbild aus.

Eine Erhöhung der Extrusionsgeschwindigkeit auf 1,9 m/min führte ebenfalls bei ansonst unverändertem Versuchsaufbau zu einwandfrei beschichteten Substraten. Durch die erhöhte Extrusionsgeschwindigkeit reduzierte sich die zur Verfügung stehende UV-Härtungsdosis auf 710 mJ/cm².

Es wurde die Haftfestigkeit der Beschichtungen mittels Gitterschnittprüfung nach EN ISO 2409 / ASTM D3359 auf den Substraten ermittelt. Beurteilt wurde
a.) der Gitterschnitt mit und ohne Klebebandabriss (verwendetes Klebeband: Scotch^{™} 610-1PK von 3M), sowie
b.) der Gitterschnitt nach Lagerung in 98°C heißem Wasser nach Klebebandabriss (verwendetes Klebeband: Scotch^{™} 610-1PK von 3M) für eine Gesamtdauer von 1 Std., wobei die Beurteilung nach 0,5 sowie 1 Stunde erfolgte.

Die Beurteilung erfolgte nach dem in der Norm angegeben Notensystem, wobei 0 keinerlei Enthaftung bedeutet und 5 entsprechend flächigen Delaminationen entspricht.

Unabhängig von der genutzten UV-Härtungsdosis zeigten beide Beschichtungen eine einwandfreie Grundhaftung zum Substrat (Prüfung a.)). Nach 30 min in kochendem Wasser analog Prüfung b.) zeigten beide Beschichtungen weiterhin keinerlei Beanstandungen. Erst nach 1 Stunde Lagerung in kochendem Wasser delaminierten die Beschichtungen vom Substrat nach dem Klebebandabriss.

Beispiel 1 verdeutlich, dass unter den gewählten Bedingungen und Parametern das Applizieren von Beschichtungsmaterialien inline in einer Extrusionslinie durchführbar ist und zu einem Beschichtungsergebnis mit guter optischer Qualität führt.

Zur weiteren Optimierung der Haftung wurden nachfolgende Beispiele 2 und 3 offline, jedoch der inline-Produktion nachgestellten Bedingungen durchgeführt.

### Beispiel 2 (erfindungsgemäß):

### a) Herstellung der Stegdoppelplatte

10 mm mit einer einseitigen Koextrusionsschicht versehene Stegdoppelplatten wurden aus folgender Zusammensetzung erhalten:
Als Basismaterial wurde eine Mischung zu gleichen Anteilen bestehend aus Makrolon® 1243 (verzweigtes Bisphenol-A Polycarbonat der Bayer AG, Leverkusen mit einem Schmelzflussindex (MFR) gemäß ISO 1133 von 6,5 g/10 min bei 300°C und 1,2 kg Belastung) und Makrolon® 3103 (verzweigtes Bisphenol-A Polycarbonat der Bayer AG, Leverkusen mit einem Schmelzflussindex (MFR) gemäß ISO 1133 von 6,5 g/10 min bei 300°C und 1,2 kg Belastung) verwendet.

Koextrudiert wurde dieses Material mit einem Polycarbonat auf Basis von Makrolon® 3108 (lineares Bisphenol-A Polycarbonat der Bayer AG, Leverkusen mit einem Schmelzflussindex (MFR) gemäß ISO 1133 von 6,5 g/10 min bei 300°C und 1,2 kg Belastung). Die Dicke der Koex-Schicht beträgt jeweils etwa 50 µm.

Das Material der Koextrusionsschicht enthält hierbei neben 0,25 % Penta-erythrit-tetra-stearat (PETS, im Handel erhältlich als Loxiol® VPG 861 der Fa. Cognis, Düsseldorf, Deutschland) auch einen UV-Absorber auf Basis eines Benzotriazols (2,2'-methylenebis(6-(2H-benzotriazol-2-yl)-4-1,1,3,3-tetramethyl-butyl)phenol) im Handel erhältlich bei der Firma Ciba, Schweiz als Tinuvin 360®).

Die Koextrusionsanlage bestand aus folgenden Werkzeugen und Maschinen:
- einem Einschneckenextruder (Entgasungsextruder, Schneckendurchmesser 70 mm und einer Einschnecke der Länge 33 D, Einschnecke, Fa. Reifenhäuser, Troisdorf/Germany) Der Extruder ist mit einer Vakuum-Schmelzeentgasung ausgerüstet.
- einem 2-Schicht Koextrusionsadapter (Festadapter der Fa. Bexsol, Italy)
- einem 3-Zonen-Koextruder (Schneckendurchmesser 30 mm, Einschnecke der Länge 25 D, Fa. Omipa, Italy)
- einer Stegplattendüse der Breite 500 mm, für Stegplattendicken von 8 bis 45 mm der Fa. Bexsol, Italy
- einem zweiteiligen Vakuumkalibrator, Breite 500 mm, Länge 2x950 mm, Fa. Breyer, Singen/Germany
- der Rollenbahn Rollenbahnlänge (Abstand Kalibrator / Ablängung) 3,5 m
- der Abzugseinrichtung
- der Quertrenneinrichtung (Messer)
- dem Ablagetisch.

Die einseitig mit einer Koextrusionsschicht versehene Stegplatte wurde wie folgt hergestellt: Das Polycarbonat-Granulat des Basismaterials wurde dem Fülltrichter des Hauptextruders zugeführt, das Koextrusionsmaterial dem des Koextruders. Im jeweiligen Plastifiziersystem Zylinder/Schnecke erfolgte das Aufschmelzen und Fördern des jeweiligen Materials. Beide Materialschmelzen wurden im Koexadapter zusammengeführt und bilden nach Verlassen der Düse und Abkühlen einen Verbund. Die weiteren Einrichtungen dienen dem Transport, Ablängen und Ablegen der extrudierten Platten.

Die Temperaturen der einzelnen Gehäuse des Hauptextruders lagen bei 240°C bis 260°C und die resultierende Massetemperatur bei 250°C bis 255°C. Die Wellendrehzahl lag bei 67 U/min. Die Abzugsgeschwindigkeit lag bei 1,1 m/min. Die Gehäusetemperaturen des Koextruders lagen bei 265°C, die Massetemperatur betrug bei ca. 263°C. Die Wellendrehzahl betrug 12 U / min.

Die Stegdoppelplatten wurden auf eine Größe DINA4 zurechtgeschnitten. An der koextrudierten Stegplatte betrug die Dicke der Koex-Schicht 50µm.

### b) Herstellung der Beschichtungszusammensetzung

Zuerst wurden in einem Rührgefäß mit Rührer und Rühraggregat 20,95 g Reaktivverdünner (RV) 1,6-Hexandioldiacrylat vorgelegt. Danach wurden bei 500 U/min nacheinander 3,81 g Irgacure 184, 0,95 g Lucirin TPO-L, 1,05 g Tinuvin 479 und 0,48 g BYK 302 nacheinander zugegeben, wobei jeweils solange gerührt wurde, bis das jeweilige Additiv sich homogen gelöst hatte. Danach wurde für 5 Minuten lang gerührt.

Anschließend wurden zu der Additivlösung unter stetigem Rühren 68,00 g des ersten Beschichtungsmittels Desmolux^{®} U 680 H zugesetzt und die Formulierung für weitere 10 min homogenisiert. Zur Komplettierung wurden in analoger Weise 4,76 g des zweiten Beschichtungsmittels Desmolux^{®} D 100 zu dem Ansatz zugegeben und die Mischung erneut für 10min homogenisiert.

Die derart hergestellte Beschichtungslösung wurden vor der Applikation durch eine Filterdrucknutsche über einen handelsüblichen Cellulosefilter Whatman^{®} Grade 40 der Firma Whatman International Ltd - Porengröße 8µm - filtriert.

### c) Weiterbehandlung der Platten

Die Weiterbehandlung der Platten erfolgte unter inline-produktionsnahen Bedingungen, um eine komplette inline-Herstellung der Platten zu simulieren. Die Weiterbehandlung und Beschichtung erfolgte einseitig auf der Koextrusionsschicht.

### c.1) Vorbehandlung

Die Vorbehandlung der unbeschichteten Platten wurde mittels einer UV-Anlage Typ U300-M-1-TR der Firma IST Strahlentechnik GmbH, Nürtingen mit einer Quecksilberlampe Typ MC200 (Leistung 80W/cm) durchgeführt. Die zur Vorbehandlung benötigte Dosis wurde mit einem Dosimeter eta plus UMD-1 der Firma eta plus electronic ermittelt. Bei einer Durchlaufgeschwindigkeit von 4 m/min wurde in einem Durchlauf durch die beschriebene UV-Anlage eine Gesamtstrahlungsintensität von 0,95 J/cm² zur Oberflächenaktivierung der unbeschichteten Platten genutzt.

### c.2) Applikation der Beschichtungsmittel auf Stegdoppelplatten

Die unter 2 b) hergestellte Beschichtungszusammensetzung wurde mit einem handelsüblichen Rakel (Sollnassschichtdicke 40µm) einseitig auf die Stegdoppelplatten (Größe DINA4) aufgetragen. Hierbei betrug die Temperatur der Beschichtungslösung ca. 40°C und die der Stegdoppelplatte ca. 80°C um produktionsnahe Begebenheiten zu simulieren. Nach einer Ablüftphase von 10sek. bei 20°C bis 25°C wurden die lackierten Platten für 30sek. bei 80°C in einem Umluftofen konditioniert.

### c.3) Aushärtung der lackierten Stegdoppelplatten durch UV-Strahlung

Die UV-Härtung der beschichteten Platten wurde mittels einer UV-Anlage Typ U300-M-1-TR der Firma IST Strahlentechnik GmbH, Nürtingen mit einer Quecksilberlampe Typ MC200 (Leistung 80W/cm) durchgeführt. Die zur Aushärtung benötigte Dosis wurde mit einem Dosimeter eta plus UMD-1 der Firma e-ta plus electronic ermittelt. Bei einer Durchlaufhärtungsgeschwindigkeit von 4 m/min und 2 Durchläufen durch die beschriebene UV-Anlage wurde eine Gesamtstrahlungsintensität von 2 * 0,95 J/cm² → 1,9 J/cm² zur Aushärtung der lackierten Platten genutzt.

### Beispiel 3 (erfindungsgemäß):

**a)** Die **Herstellung der Stegdoppelplatte** erfolgte analog Beispiel 1 a).
**b) Herstellung der Beschichtungszusammensetzung**
   Zuerst wurden in einem Rührgefäß mit Rührer und Rühraggregat 34,55 g Reaktivverdünner (RV) 1,6-Hexandioldiacrylat vorgelegt. Danach wurden bei 500 U/min nacheinander 3,81 g Irgacure 184, 0,95 g Lucirin TPO-L, 1,05 g Tinuvin 479 und 0,48 g BYK 302 nacheinander zugegeben, wobei jeweils solange gerührt wurde, bis das jeweilige Additiv sich homogen gelöst hatte. Danach wurde für 5 Minuten lang gerührt. Anschließend wurden zu der Additivlösung unter stetigem Rühren 54,40 g des ersten Beschichtungsmittels Desmolux^{®} XP 2666 zugesetzt und die Formulierung für weitere 10 min homogenisiert. Zur Komplettierung wurden in analoger Weise 4,76 g des zweiten Beschichtungsmittels Desmolux^{®} D 100 zu dem Ansatz zugegeben und die Mischung erneut für 10min homogenisiert.

Die derart hergestellte Beschichtungslösung wurden vor der Applikation durch eine Filterdrucknutsche über einen handelsüblichen Cellulosefilter Whatman^{®} Grade 40 der Firma Whatman International Ltd - Porengröße 8µm - filtriert.
c) Die **Weiterbehandlung der Platten** erfolgte analog Beispiel 1 c). Die Platten wurden mit der unter 2 b) hergestellten Beschichtungszusammensetzung beschichtet.

### Beispiel 4 (Vergleich):

Kommerziell erhältliche, inline beschichtete Stegdoppelplatte Lexan^{®} Thermoclear Plus 2 UV, keine Urethanacrylatbeschichtung

### Beispiel 5 (Vergleich):

Kommerziell erhältliche, inline hergestellte witterungsstabile Stegdoppelplatte Makrolon^{®} multi UV no drop (Bayer Sheet Europe), koextrudierte Polycarbonat-Außenseite (Seite A)

### Beispiel 6 (Vergleich):

Kommerziell erhältliche, inline hergestellte witterungsstabile Stegdoppelplatte Makrolon^{®} multi UV no drop (Bayer Sheet Europe), inline mit wasserspreitender Kieselsolschicht beschichtete Innenseite (Seite B)

### Ausprüfungen der Platten

Alle Prüfungen wurden an ausgehärteten, beschichteten Proben vollzogen. Folgende Prüfungen wurden durchgeführt.

### Abriebbeständigkeit mittels Taber Abrasion Tester und Streulichtmessung nach DIN 52347

Aus den Platten wurde jeweils ein flacher Prüfkörper mit den Maßen 100mm x 100mm präpariert. Zur verbesserten Handhabung wurden die Stege der Prüfkörper parallel zur Gurtebene durchtrennt. Der Anfangs-Haze-Wert dieses Prüfköpers wurde gemäß ASTM D1003 mit einem Haze Gard Plus der Firma BYK-Gardner bestimmt. Anschließend wurde die beschichtete Seite des Prüfkörpers mittels eines Taber Abraser Modell 5131 der Firma Erichsen gemäß DIN 52347 bzw. ASTM D1044 unter Verwendung der CS10F Räder (Typ IV; graue Farbe) und 500g Auflagegewicht pro Reibrad verkratzt. Durch Bestimmung des End-Haze-Wertes nach 25, 100, 500 und 1000 Umdrehungen ließen sich Δ Haze-Werte des Prüfkörpers aus der Differenz von End-Haze-Wert bei gegebener Umdrehungsanzahl und Anfangs-Haze Wert ermitteln.

### Kratzbeständigkeit mittels Bleistift-Härteprüfer nach ISO 15184 bzw. ASTM D3363

Aus den Platten wurde ein flacher Prüfkörper präpariert und auf einer Glasplatte fixiert. Die Bleistifthärte wurde unter Verwendung des Bleistift-Härteprüfers nach Wolf-Wilburn der Firma BYK-Gardner und Bleistiften der Firma Cretacolor ermittelt. Hierbei wurde in Anlehnung an ISO 15184 die Bezeichnung des Bleistifts angegeben, der in der Prüfanordnung bei einem Druck von 750g unter einem 45° Winkel gerade keine Oberflächenverletzung mehr verursacht.

### Haftfestigkeit mittels Gitterschnittprüfung nach EN ISO 2409 / ASTM D3359

Es wurde die Haftfestigkeit der Beschichtungen auf der Platte ermittelt. Beurteilt wurde
a.) der Gitterschnitt mit und ohne Klebebandabriss (verwendetes Klebeband: Scotch^{™} 610-1PK von 3M), sowie
b.) der Gitterschnitt nach Lagerung in 98°C heißem Wasser nach Klebebandabriss (verwendetes Klebeband: Scotch^{™} 610-1PK von 3M) für eine Gesamtdauer von 4 Std., wobei die Beurteilung nach 1, 2 u. 4 Stunden erfolgte.

Die Beurteilung erfolgte nach dem in der Norm angegeben Notensystem, wobei 0 keinerlei Enthaftung bedeutet und 5 entsprechend flächigen Delaminationen entspricht.

### Chemikalienbeständigkeit

Aus den Platten wurde jeweils ein flacher Prüfkörper präpariert. Jeweils ein Tropfen 1%iger Schwefelsäure und 1%iger Natronlauge wurde auf die Prüfkörper gegeben und mit einem Uhrglas abgedeckt. Die derart präparierten Oberflächen wurden in einem Umluftofen für 1 Stunde bei 50°C bzw. 70°C temperiert. Nach der abgelaufenen Einwirkzeit wurden die Proben unter fließendem Wasser gereinigt und dann visuell beurteilt.

### Lösungsmittelbeständigkeit

Aus den Platten wurde jeweils ein flacher Prüfkörper präpariert. Jeweils ein Tropfen Aceton, Butylacetat und Xylol wurde auf die Prüfkörper gegeben und mit einem Uhrglas abgedeckt. Die derart präparierten Oberflächen wurden nach Einwirkzeiten bei Raumtemperatur (ca. 23°C) von 5min., 15min., 30min. und 1 Stunde unter fließendem Wasser gereinigt und dann visuell beurteilt.

### Schichtdicke der Schutzschicht

Die Schichtdicken der Schutzschichten wurde mit einem Weißlichtinterferrometer ETA-SST der Firma ETA-Optik GmbH ermittelt.

### Witterungsstabilität

Bewittert wurde in einem Ci65 der Firma Atlas bei einer Strahlungstärke von 0,51 W/m²/nm bei 340 nm in einem 102:18 Trocken/Nass-Zyklus. Als Filter wurden boro/boro (Daylight-Filterung) gewählt, Schwarztafel-Temperatur war 60 (±2) °C und die Probenraumtemperatur betrug 38 (±2) °C (Trockenzylus) angelehnt an die DIN ISO 4892. Als Maß für die Vergilbung wurde der Yellowness-index vor und nach der entsprechenden Bewitterungszeit nach ASTM E313 ermittelt und die Differenz als Ergebnis angegeben. Je höher die Differenz der beiden korrespondierenden Yellownessindizes, desto stärker ist bei gegebener Bewitterungszeit die Vergilbung.

Die Ergebnisse der Prüfungen an Probekörpern, die den beschichteten Platten gemäß Beispielen 1 - 5 entnommen wurden, sind in der Tabelle 1 zusammengestellt.

**Tab. 1) Ergebnisse der Ausprüfungen**

| **Beschichtete Platte, Beispiel** | | **2** | **3** | **4** | **5** | **6** |
|---|---|---|---|---|---|---|
| **Schichtdicke [µm]** | | ca. 16 | ca. 16 | ca. 4 | ca. 50 | ca. 0,3 |
| **Transparenz [%]** | | 92,0 | 88,9 | 89,5 | 89,4 | 91,3 |
| **Haze [%]** | | 4,4 | 5,4 | 6,8 | 7,4 | 5,6 |
| **Abriebbeständigkeit** | **25 Zyklen** | 5,2 | 5,5 | 13,8 | 19,7 | 11,1 |
| **(Δ-Haze Werte in [%])** | **100 Zyklen** | 13,2 | 15,9 | 25,0 | 22,2 | 14,7 |
| **Bleistifthärte** | **750 g Last** | 2H | 2H | H | < 6B | < 6B |
| **Haftung (Gitterschnitt ohne Klebebandabriss)** | | 0 | 0 | 0 | nicht anwendbar | 0 |
| **Haftung (Gitterschnitt nach Klebebandabriss und Lagerung in 98 ° C heißem Wasser)** | **0 h bei 98 °C** | 0 | 0 | 0 | nicht anwendbar | 0 |
| | **1 h bei 98 °C** | 0 | 0 | 0 | nicht anwendbar | 0 |
| | **2 h bei 98 °C** | 0 | 0 | 0 | nicht anwendbar | 0 |
| | **4 h bei 98 °C** | 0 | 0 | 0 | nicht anwendbar | 0 |
| **Witterungsstabilität** | **ΔYI nach 4200h** / **Xe-WOM 0.51** | 1,4 | 1,7 | 5,5 | 3,1 | nicht ermittelt |
| **LösungsmittelBeständigkeit¹ (1/15/30/60 min)** | **Aceton** | +/+/+/+ | +/+/+/+ | +/-/-/- | -/-/-/- | -/-/-/- |
| | **Butylacetat** | +/+/+/+ | +/+/+/+ | +/-/-/- | -/-/-/- | -/-/-/- |
| | **Xylol** | +/+/+/+ | +/+/+/+ | +/-/-/- | -/-/-/- | -/-/-/- |
| **Chemikalienbeständigkeit bei gegebener Temperatur¹** | **50°C NaOH** | + | + | + | - | + |
| | **50°C H₂SO₄** | + | + | + | + | + |
| | **70°C NaOH** | + | + | + | - | - |
| | **70°C H₂SO₄** | + | + | - | + | + |

| | | | | | | |
|---|---|---|---|---|---|---|
| 1) "-" → nicht in Ordnung; "+" → in Ordnung, "0" → keinerlei Enthaftung | | | | | | |

Die Ergebnisse zeigen, dass sich aus den Acrylat-haltigen Beschichtungen unter Herstellbedingungen, die sich auf ein inline-Produktionsverfahren übertragen lassen, erfindungsgemäße beschichtete Produkte herstellen lassen,
a) die in der optischen Qualität (Transparenz, Haze) vergleichbar mit oder besser als kommerziell erhältliche, inline beschichtete Produkte sind,
b) die in der Witterungsstabilität, Abriebbeständigkeit und Härte sowie in der Lösungsmittel- und Chemikalienbeständigkeit die kommerziell erhältlichen, inline beschichteten Vergleichsprodukte zum Teil deutlich übertreffen, und
c) deren Beschichtungen ebenso gut haften wie die der kommerziell erhältlichen, inline beschichteten Vergleichsprodukte
d) die frei von Lösungsmittelresten sind.

Damit lassen sich die Beschichtungen in den erfindungsgemäßen umweltschonenden und wirtschaftlichen inline-Verfahren zu den erfindungsgemäßen, beschichteten Produkten sehr guter Qualität verarbeiten.

## Patentansprüche

1. Verfahren zur Herstellung eines mehrschichtigen Erzeugnisses umfassend a) ein Substrat enthaltend mindestens eine Substratschicht und b) mindestens eine Schutzschicht, wobei die Substratschicht(en) thermoplastisches Polymer enthält/enthalten, und wobei die Schutzschicht(en) aus einer Beschichtungszusammensetzung aus
A. 30,0 bis 80,0 Gew.-% einer oder mehrerer Verbindungen ausgewählt aus der Gruppe enthaltend Verbindungen, die über eine Molmasse größer 450 g/mol und über mindestens zwei funktionelle Gruppen, die durch Einwirkung aktinischer Strahlung mit ethylenisch ungesättigten Verbindungen unter Polymerisation reagieren, verfügen und die keine Isocyanat-Gruppen aufweisen;
B. 15,0 bis 50,0 Gew.-% Reaktivverdünner enthaltend mindestens zwei ethylenisch ungesättigte Gruppen;
C. 1 bis 50,0 Gew.-% einer oder mehrerer Verbindungen ausgewählt aus der Gruppe enthaltend Isocyanate mit mindestens einer ethylenisch ungesättigter Doppelbindung im Molekül,
D. 0,01 bis 10,0 Gew.-% Lichtschutzmittel auf Basis eines Triazin-Derivates;
E. 1,0 bis 10,0 Gew.-% Fotoinitiatoren; und
F. weitere Lackadditive;
erhältlich sind,
wobei die Einsatzmenge aller vorgenannten Komponenten in der Beschichtungsmittelzusammensetzung 100 Gew.% ergibt, und wobei die Beschichtungszusammensetzung nach dem Auftragen durch aktinische Strahlung zu einer duroplastischen Schutzschicht gehärtet wurde,
**dadurch gekennzeichnet, dass** die Schutzschicht(en) inline unmittelbar nach der Herstellung des Substrats enthaltend die Substratschichten aufgebracht wird/werden und die Extrusionsgeschwindigkeit, bezogen auf die Herstellung des Substrats, 1 m/min bis 7 7 m/min beträgt.

2. Verfahren gemäß Anspruch 1, **dadurch gekennzeichnet, dass** die Substratschicht(en) mittels (Ko)extrusion hergestellt wird/werden.

3. Verfahren gemäß Anspruch 1 oder 2, **dadurch gekennzeichnet, dass** die Schutzschicht(en) mittels Rakeln, Gießen oder Walzen aufgebracht wird/werden.

4. Verfahren gemäß einem der Ansprüche 1 - 3, **dadurch gekennzeichnet, dass** das Substrat vor dem Aufbringen der Schutzschicht(en) eine Temperatur von 60 °C - 90 °C besitzt.

5. Verfahren gemäß Anspruch 4, **dadurch gekennzeichnet, dass** die Extrusionsgeschwindigkeit 1 m/min bis 2,5 m/min beträgt.

6. Verfahren gemäß einem der Ansprüche 1-5, **dadurch gekennzeichnet, dass** das beschichtete Substrat während der Aushärtung mit aktinischer Strahlung einer UV-Härtungsdosis von 500 mJ/cm2 - 4000 mJ/cm2 eine Temperatur von 90 °C nicht übersteigt.

7. Verfahren gemäß Anspruch 1 bis 6 zur Herstellung von Folien und Platten, wie Massivplatten oder Stegplatten.

8. Verfahren gemäß Anspruch 1 bis 6 zur Herstellung von Stegplatten mit 2 bis 8 Stegen.

9. Verfahren gemäß Anspruch 1, **dadurch gekennzeichnet, dass** die Beschichtung frei von Lösungsmittelresten ist.

10. Verfahren gemäß Anspruch 1, **dadurch gekennzeichnet, dass** es sich bei der Komponente A um Polyetheracrylate, Polyesteracrylate, Urethanacrylate, Epoxyacrylate, Melaminacrylate, Silikonacrylate, Polycarbonatacrylate und/oder acrylierte Polyacrylate handelt.

11. Verfahren gemäß einem der Ansprüche 1 - 7, **dadurch gekennzeichnet, dass** sich die Schutzschicht auf einer oder auf beiden Seiten des Substrats befindet und das Erzeugnis weitere funktionale Schichten aufweisen kann.

12. Verfahren gemäß Anspruch 1, **dadurch gekennzeichnet, dass** die thermoplastischen Polymere der Substratschicht(en) ausgewählt sind aus der Gruppe enthaltend Poly(meth)acrylate, Homopolycarbonate, Copolycarbonate, thermoplastische Polyestercarbonate und Blends aus diesen Polymeren.

13. Mehrschichtiges Erzeugnis erhältlich nach dem Verfahren gemäß Anspruch 1 bis 12.

14. Verwendung von Folien und Platten gemäß Anspruch 13 als Bedachungen und Verglasungen von Schwimmbädern, Carports, Gewächshäusern, Industriekomplexen und privaten Gebäuden, Automobilverscheibung, Barrel Vaults sowie Lärmschutz- und Sichtschutzwände.

## Claims

1. Method of producing a multi-layer product comprising a) a substrate comprising at least one substrate layer and b) at least one protective layer, the substrate layer(s) comprising thermoplastic polymer, and the protective layer(s) being obtainable from a coating composition composed of
A. 30.0% to 80.0% by weight of one or more compounds selected from the group containing compounds which possess a molar mass of more than 450 g/mol and possess at least two functional groups that react by exposure to actinic radiation with ethylenically unsaturated compounds, with polymerization, and which have no isocyanate groups;
B. 15.0% to 50.0% by weight of reactive diluents containing at least two ethylenically unsaturated groups;
C. 1% to 50.0% by weight of one or more compounds selected from the group containing isocyanates having at least one ethylenically unsaturated double bond in the molecule,
D. 0.01% to 10.0% by weight of light stabilizers based on a triazine derivative;
E. 1.0% to 10.0% by weight of photoinitiators; and
F. further coatings additives;
the amount of all of the aforementioned components used in the coating material composition being 100% by weight, and the coating composition, following application, being cured by actinic radiation to form a thermoset protective layer,
**characterized in that** the protective layer(s) is/are applied in-line directly following the production of the substrate comprising the substrate layers and the extrusion rate, based on the production of the substrate, is 1 m/min to 7 m/min.

2. Method according to Claim 1, **characterized in that** the substrate layer(s) is/are produced by (co)extrusion.

3. Method according to Claim 1 or 2, **characterized in that** the protective layer(s) is/are applied by coating with a doctor knife, pouring or rolling.

4. Method according to any of Claims 1 - 3, **characterized in that** the substrate before the application of the protective layer(s) possesses a temperature of 60 - 90°C.

5. Method according to Claim 4, **characterized in that** the extrusion rate is 1 m/min to 2.5 m/min.

6. Method according to any of Claims 1 - 5, **characterized in that** the coated substrate, in the course of curing with actinic radiation with a UV cure dose of 500 mJ/cm²-4000 mJ/cm², does not exceed a temperature of 90°C.

7. Method according to Claim 1 to 6 for producing films and sheets, such as solid sheets or multiwall sheets.

8. Method according to Claim 1 to 6 for producing multiwall sheets having 2 to 8 ribs.

9. Method according to Claim 1, **characterized in that** the coating is free from solvent residues.

10. Method according to Claim 1, **characterized in that** component A comprises polyether acrylates, polyester acrylates, urethane acrylates, epoxy acrylates, melamine acrylates, silicone acrylates, polycarbonate acrylates and/or acrylated polyacrylates.

11. Method according to any of Claims 1 - 7, **characterized in that** the protective layer is located on one or on both sides of the substrate and the product may have further functional layers.

12. Method according to Claim 1, **characterized in that** the thermoplastic polymers of the substrate layer(s) are selected from the group containing poly(meth)acrylates, homopolycarbonates, copolycarbonates, thermoplastic polyestercarbonates and blends of these polymers.

13. Multi-layer product obtainable in accordance with the method according to Claim 1 to 12.

14. Use of films and sheets according to Claim 13 as roof systems and glazing systems of swimming pools, carports, greenhouses, industrial complexes and private buildings, motor vehicle glazing, barrel vaults and noise barriers and sight screens.

## Revendications

1. Procédé de fabrication d'un produit multicouche comprenant a) un substrat contenant au moins une couche de substrat et b) au moins une couche de protection, la ou les couches de substrat contenant un polymère thermoplastique, et la ou les couches de protection pouvant être obtenues à partir d'une composition de revêtement constituée
A. de 30,0 à 80,0 % en poids d'un ou plusieurs composés choisis dans le groupe contenant les composés qui disposent d'une masse moléculaire supérieure à 450 g/mol et d'au moins deux groupes fonctionnels, qui réagissent avec polymérisation sous l'action d'un rayonnement actinique avec des composés à insaturation éthylénique, et qui ne comprennent aucun groupe isocyanate ;
B. de 15,0 à 50,0 0 % en poids d'un diluant réactif contenant au moins deux groupes à insaturation éthylénique ;
C. de 1 à 50,0 % en poids d'un ou plusieurs composés choisis dans le groupe contenant les isocyanates ayant dans la molécule au moins une double liaison à insaturation éthylénique,
D. de 0,01 à 10,0 % en poids d'un agent de protection contre la lumière à base d'un dérivé de triazine ;
E. de 1,0 à 10,0 % en poids de photoamorceurs ; et
F. d'autres additifs pour peinture ;
la quantité utilisée de tous les composants ci-dessus de la composition de revêtement faisant un total de 100 % en poids, et la composition de revêtement étant, après application, durcie sous l'effet d'un rayonnement actinique pour donner une couche de protection thermodurcissable,
**caractérisé en ce que** la ou les couches de protection sont appliquées en ligne immédiatement après la fabrication du substrat contenant les couches de substrat, et la vitesse d'extrusion, rapportée à la fabrication du substrat, est de 1 m/min à 7 m/min.

2. Procédé selon la revendication 1, **caractérisé en ce que** la ou les couches de substrat sont fabriquées par (co)extrusion.

3. Procédé selon la revendication 1 ou 2, **caractérisé en ce que** la ou les couches de protection sont appliquées à la racle, par coulée, ou au rouleau.

4. Procédé selon l'une des revendications 1 à 3, **caractérisé en ce que** le substrat présente, avant application de la ou des couches de protection, une température de 60 à 90°C.

5. Procédé selon la revendication 4, **caractérisé en ce que** la vitesse d'extrusion est de 1 m/min à 2,5 m/min.

6. Procédé selon l'une des revendications 1 à 5, **caractérisé en ce que** le substrat revêtu ne dépasse pas une température de 90°C pendant le durcissement avec un rayonnement actinique ayant une dose de durcissement aux UV de 500 mJ/cm² à 4 000 mJ/cm².

7. Procédé selon les revendications 1 à 6 pour la fabrication de feuilles ou de plaques, telles que des plaques massives ou des plaques nervurées.

8. Procédé selon les revendications 1 à 6 pour la fabrication de plaques nervurées à 2 à 8 nervures.

9. Procédé selon la revendication 1, **caractérisé en ce que** le revêtement est exempt de résidus de solvant.

10. Procédé selon la revendication 1, **caractérisé en ce que**, pour ce qui concerne le composant A, il s'agit de polyéther-acrylates, de polyester-acrylates, d'uréthanne-acrylates, d'époxy-acrylates, de mélamine-acrylates, de silicone-acrylates, de polycarbonate-acrylates et/ou de polyacrylates acrylés.

11. Procédé selon l'une des revendications 1 à 7, **caractérisé en ce que** la couche de protection se trouve sur l'un des côtés ou sur les deux côtés du substrat, et le produit peut comporter des couches fonctionnelles supplémentaires.

12. Procédé selon la revendication 1, **caractérisé en ce que** les polymères thermoplastiques de la ou des couches de substrat sont choisis dans le groupe contenant les poly(méth)acrylates, les homopolycarbonates, les copolycarbonates, les polyester-carbonates et les mélanges de ces polymères.

13. Produit multicouche pouvant être obtenu par le procédé selon les revendications 1 à 12.

14. Utilisation de feuilles et de plaques selon la revendication 13 pour des couvertures et vitrages de piscines, d'abris pour voitures, de serres, de complexes industriels et de bâtiments privés, en tant que vitrages pour automobiles, arcs cylindriques, ainsi que murs anti-bruit et écrans brise-vue.
